Europäisches Patentamt

European Patent Office

Office européen des brevets

(19)

(11) **EP 1 529 800 A1**

(12) **EUROPÄISCHE PATENTANMELDUNG**

(43) Veröffentlichungstag:
**11.05.2005 Patentblatt 2005/19**

(51) Int Cl.⁷: **C08J 5/18**, B32B 27/36

(21) Anmeldenummer: **04025895.6**

(22) Anmeldetag: **02.11.2004**

(84) Benannte Vertragsstaaten:
**AT BE BG CH CY CZ DE DK EE ES FI FR GB GR
HU IE IS IT LI LU MC NL PL PT RO SE SI SK TR**
Benannte Erstreckungsstaaten:
**AL HR LT LV MK YU**

(30) Priorität: **10.11.2003 DE 10352439**

(71) Anmelder: **Mitsubishi Polyester Film GmbH
65203 Wiesbaden (DE)**

(72) Erfinder:
 • **Pfeiffer, Herbert, Dr. Professor
  55126 Mainz (DE)**

 • **Janssens, Bart, Dr.
  65189 Wiesbaden (DE)**
 • **Kuhmann, Bodo
  65594 Runkel (DE)**
 • **Brömmel, Paul
  55129 Mainz (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(54) **Verfahren zur Herstellung einer heisssiegelbaren und peelfähigen Polyesterfolie**

(57) Die Erfindung betrifft ein Verfahren zur Herstellung einer biaxial orientierten Polyesterfolie, welche eine Basisschicht (B) und eine heißsiegelbare und gegenüber Polyester peelfähige Deckschicht (A) aufweist, wobei die Deckschicht (A) 60 bis 99 Gew.-% Polyester enthält, der zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen, wobei die Summe der Molprozente 100 ergibt,
umfassend die Schritte

a) Extrusion zumindest der Basisschicht (B) zu einer unorientierten Folie;

b) Streckung dieser Folie in eine erste Richtung;
c) Streckung dieser Folie in einer zweiten, zur ersten senkrechten Richtung;
d) Thermofixierung der gestreckten Folie und
e) Erzeugung der Deckschicht (A) auf der Basisschicht (B) durch Auflaminierung der in einem getrennten Prozess hergestellten Deckschichtfolie (A), wobei der Laminierschritt e) vor Schritt b) oder zwischen den Schritten b) und c) erfolgt.

**Beschreibung**

Die Erfindung bezieht sich auf ein Verfahren zur Herstellung einer heißsiegelbaren, peelfähigen, biaxial orientierten Polyesterfolie, die z. B. als Deckelfolie für Behälter (Menüschalen, Joghurtbecher, etc.) verwendet werden kann. Die Polyesterfolie besteht aus einer Basisschicht (B) und mindestens einer auf dieser Basisschicht (B) aufgebrachten Beschichtung (= Deckschicht (A)). Die Deckschicht (A) ist heißsiegelbar und zeichnet sich z. B. durch eine leichte bis feste Peelbarkeit zu APET und CPET aus.

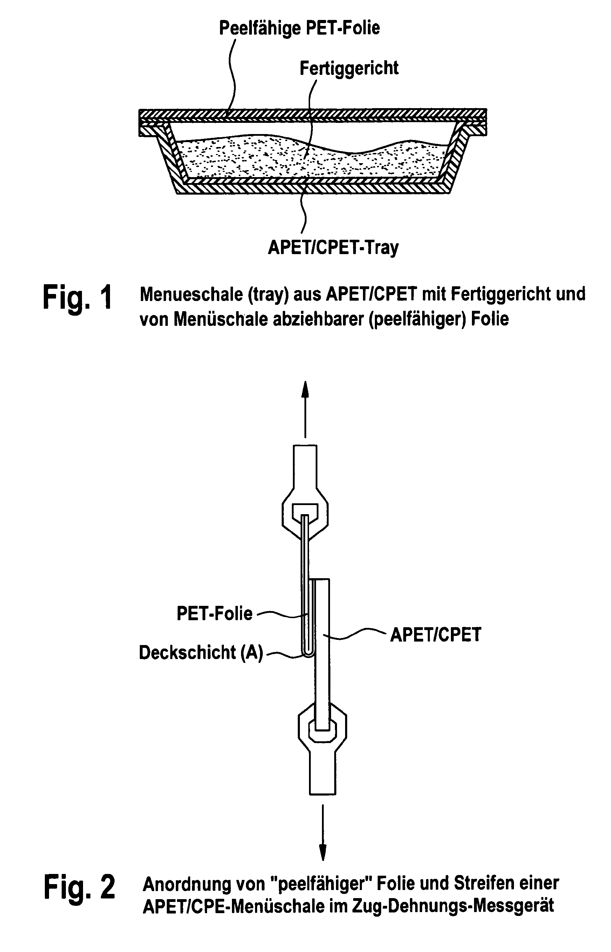

Fertiggerichte, die sich in Europa erhöhter Zuwachsraten erfreuen, werden nach ihrer Herstellung in Menüschalen (engl. trays) eingefüllt (vgl. Figur 1). Auf den Rand der Menüschale wird eine Folie heißgesiegelt, die die Verpackung verschließt und das Fertiggericht gegen äußere Einflüsse schützt. Die Fertiggerichte sind z.B. für die Erhitzung in der Mikrowelle und im Backofen geeignet. Hierbei muss das Fertiggericht und die Verpackung "dual ovenable" (= Mikrowellen- und Backofen fähig) sein. Auf Grund der im Backofen vorherrschenden Temperaturen (bis 220 °C) werden an das Verpackungsmaterial (Menüschale und Deckelfolie) besonders hohe Anforderungen gestellt.

Typische, Mikrowellen- und Backofen fähige Materialien für die Menüschale und die Deckelfolie sind PET = Polyethylenterephthalat, CPET = kristallines PET, APET = amorphes PET.

Menüschale

CPET, Aluminium, mit PET oder mit PET-Folie beschichteter Karton oder Schalen aus APET/CPET. Menüschalen aus APET/CPET (vgl. Figur 1) bestehen außen aus einer CPET-Schicht und innen, d. h. zum Fertigmenü hin, aus einer APET-Schicht. Die dicke, kristalline CPET-Schicht liefert die Stabilität der Schale, auch bei den vergleichsweise hohen Temperaturen im Backofen. Das amorphe PET verbessert im Wesentlichen die Haftung der Folie auf der Menüschale.

Deckelfolie

Hier wird in der Regel PET verwendet, das selbst bei 220 °C formstabil und fest genug bleibt. Materialien wie PP oder PE scheiden wegen ihrer niedrigen Schmelzpunkte aus. Die Anforderungen an die Deckelfolie werden am besten von biaxial orientierten Polyesterfolien erfüllt.

Bei der Zubereitung des Fertiggerichtes im Ofen wird die Polyesterfolie kurz vor der Erhitzung oder kurz nach der Erhitzung von der Menüschale mit der Hand abgezogen. Hierbei darf die Polyesterfolie auf keinen Fall ein- bzw. ein- und weiter- oder abreißen. Das Abziehen der Folie von der Menüschale, ohne dass dabei die Folie ein-, weiter- oder abreißt, wird in der Lebensmittelbranche mit "Peelen" bezeichnet. Für diese Anwendung muss die Polyesterfolie daher nicht nur heißsiegelbar, sondern insbesondere auch peelfähig sein. Bei vorgegebenem Material und vorgegebener Gesamtdicke der Folie wird die Peelfähigkeit der Folie hauptsächlich von den Eigenschaften der Oberflächenschicht der Folie, die auf die Menüschale gesiegelt ist, bestimmt.

Die Peelfähigkeit von Folien lässt sich labormäßig relativ einfach mit einem Spannungs-Dehnungstester (z. B. Fa. Zwick, DE) feststellen (vgl. Figur 2). Für diesen Test werden aus der Polyesterfolie und aus der Menüschale zwei 15 mm breite und ca. 50 mm lange Streifen ausgeschnitten und gegeneinander gesiegelt. Die Siegelschicht der Polyesterfolie bildet dabei die Deckschicht (A) und die Siegelschicht der Menüschale z. B. die APET-Schicht. Die gesiegelten Streifen werden - wie in der Figur 2 dargestellt - in die Kluppen des Testers eingespannt. Der "Winkel" zwischen der in der oberen Kluppe eingespannten Folie und dem Menüschalenstreifen beträgt 180°. Bei diesem Test werden die Kluppen des Testers mit einer Geschwindigkeit von 200 mm/min auseinander gefahren, wobei die Folie im günstigsten Fall von der Menüschale vollständig abgeschält (gepeelt) wird. (vgl. z. B. ASTM-D 3330).

Bei diesem Test ist im Wesentlichen zwischen zwei unterschiedlichen Mechanismen zu unterscheiden.

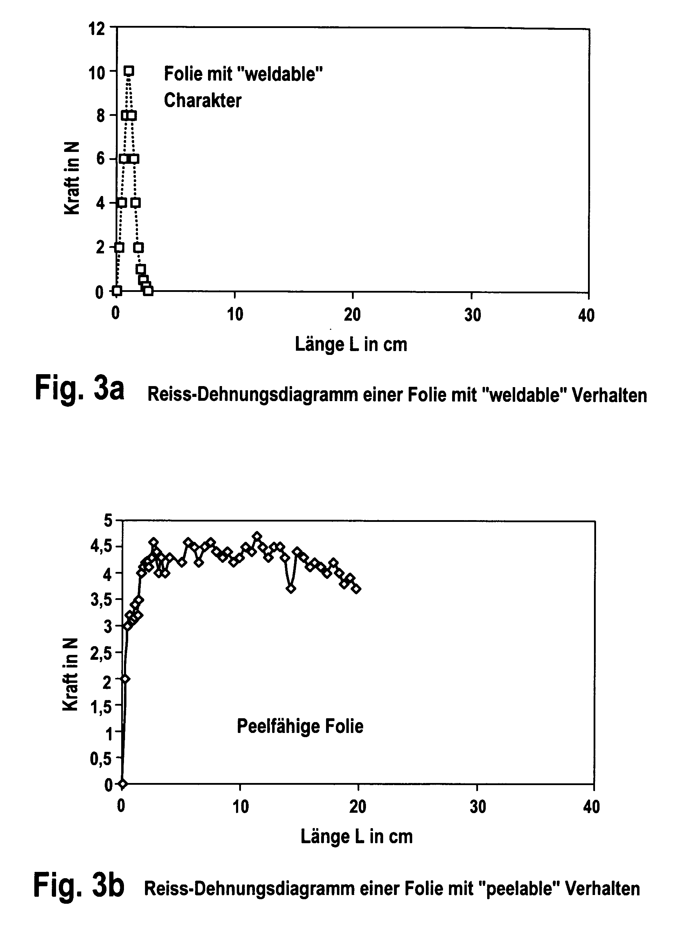

Im ersten Fall steigt beim Ziehvorgang die Zugkraft schnell bis zu einem Maximum an (vgl. Figur 3a) und fällt danach direkt wieder auf Null zurück. Beim Erreichen der Maximalkraft reißt die Folie ein oder vor dem Delaminieren von der Menüschale ab, wodurch die Kraft sofort wieder auf Null zurückgeht. Die Folie ist in diesem Fall nicht peelfähig, da sie zerstört wird. Das Verhalten der Folie lässt sich eher als eine Art "Verschweißen" (engl. weldable) mit der Menüschale beschreiben. Die Zerstörung der Folie beim Abziehen von der Menüschale ist unerwünscht, weil damit das saubere und leichte Öffnen der Verpackung (engl. easy opening) ohne Werkzeuge wie Schere oder Messer erschwert wird.

Eine peelfähige Folie wird dagegen erhalten, wenn die Zug- oder die Schälkraft bis zu einem bestimmten Wert (bzw. bis zu einem bestimmten Plateau) ansteigt und dann über die Strecke, über die die beiden Streifen miteinander gesiegelt sind, in etwa konstant bleibt (vgl. Figur 3b). In diesem Fall reißt die Folie nicht ein, sondern lässt sich wie gewünscht von der Menüschale mit geringem Kraftaufwand abschälen (engl. peelen).

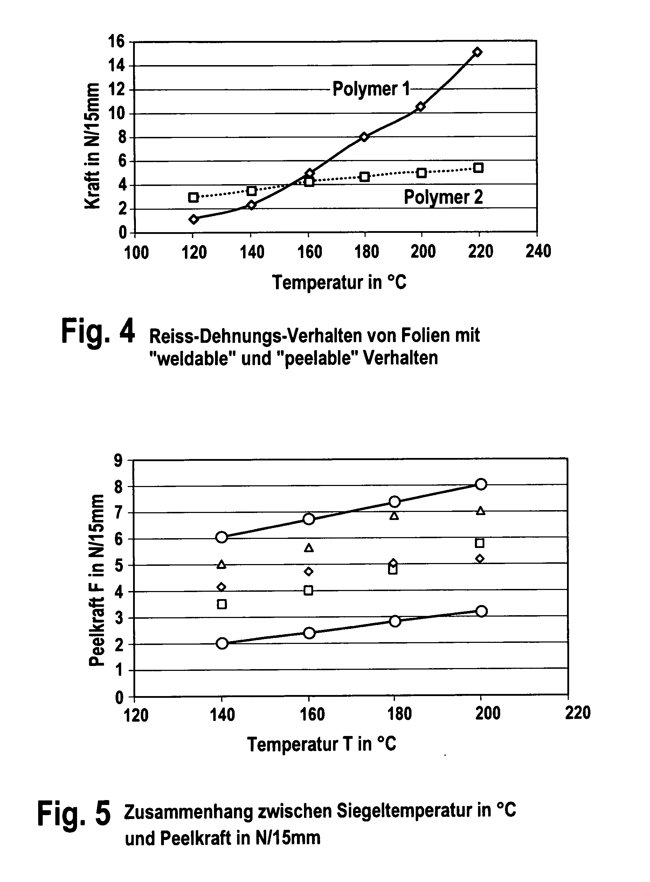

Die Höhe der Peelkraft wird in erster Linie von den in der Deckschicht (A) verwendeten Polymeren bestimmt (vgl. Figur 4, Polymer 1 und Polymer 2). Daneben ist die Höhe der Peelkraft insbesondere abhängig von der angewandten Heißsiegeltemperatur. Die Peelkraft steigt in der Regel mit der Heißsiegeltemperatur an. Mit zunehmender Heißsiegeltemperatur wächst dabei die Gefahr, dass die Siegelschicht ihre Peelfähigkeit verliert. D. h., eine Folie, die bei Anwendung einer geringen Heißsiegeltemperatur peelfähig ist, verliert diese Eigenschaft, wenn eine genügend hohe Heißsiegeltemperatur angewendet wird. Dieses Verhalten ist insbesondere bei Polymeren zu erwarten, die die in Figur 4 für Polymer 1 gezeigte Charakteristik aufzeigen. Diesem tendenziell allgemeingültigen aber für die Anwendung eher ungünstigen Verhalten muss bei der Gestaltung der Siegelschicht Rechnung getragen werden. Die Folie muss in einem genügend großen Temperaturbereich heißgesiegelt werden können, ohne dass dabei die gewünschte Peelfähigkeit verloren geht (vgl. Polymer 2 in Figur 4). In der Praxis beträgt dieser Temperaturbereich im Allgemeinen 150 bis 220 °C, bevorzugt 150 bis 200 °C und besonders bevorzugt 150 bis 190 °C.

Die heißsiegelbare und peelfähige Schicht wird nach dem Stand der Technik in der Regel mittels so genannter off-line Methoden (d. h. in einem zusätzlichen, der Folienherstellung nachgeordneten Prozessschritt) auf die Polyesterfolie aufgebracht. Bei dieser Methode wird zunächst eine "Standardpolyesterfolie" nach einem üblichen Verfahren hergestellt. Die so hergestellte Polyesterfolie wird dann in einem weiteren Verarbeitungsschritt in einer Beschichtungsanlage "off-line" mit einer heißsiegelbaren und peelfähigen Schicht beschichtet. Bei diesem Verfahren wird das heißsiegelbare und peelfähige Polymer in einem organischen Lösungsmittel aufgelöst. Die fertige Lösung wird dann über ein geeignetes Antragsverfahren (Messergießer, Rasterwalze, Düse) auf die Folie appliziert. In einem nachgeschalteten Trockenofen wird das Lösungsmittel verdunstet und das peelfähige Polymer bleibt als feste Schicht auf der Folie zurück.

Solch ein off-line Antrag der Siegelschicht ist aus mehreren Gründen vergleichsweise kostspielig. Erstens muss die Beschichtung der Folie in einem separaten Schritt in einer speziellen Apparatur erfolgen. Zweitens muss das verdampfte Lösemittel wieder kondensiert und rückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend über die auf dem Tray befindliche Folie in die Speisen, wo sie den Geschmack verfälschen oder sogar den Konsumenten gesundheitlich schädigen können.

Auf dem Markt werden verschiedene off-line hergestellte peelfähige, heißsiegelbare Polyesterfolien angeboten. Die Polyesterfolien unterscheiden sich im Aufbau und in der Zusammensetzung der Deckschicht (A). Sie gelangen entsprechend ihrer (Peel)-Eigenschaften in unterschiedliche Anwendungen. Es ist z. B. üblich, die Folien von Seiten der Anwendung in Folien mit leichter Peelbarkeit (easy peel), mit fester Peelbarkeit (medium peel) und mit starker, widerstandsfähiger Peelbarkeit (strong peel) zu unterteilen. Wesentliches quantifizierbares Unterscheidungsmerkmal zwischen diesen Folien ist die Höhe der jeweiligen Peelkraft entsprechend der Figur 3b. Eine Einteilung wird an dieser Stelle wie folgt vorgenommen:

| | |
|---|---|
| Leichte Peelbarkeit (easy peel) | Peelkraft im Bereich von ungefähr 1 bis 4 N je 15 mm Streifenbreite |
| Feste Peelbarkeit (medium peel) | Peelkraft im Bereich von ungefähr 3 bis 8 N je 15 mm Streifenbreite |
| Starke, widerstandsfähige Peelbarkeit (strong peel) | Peelkraft im Bereich von mehr als 5 N je 15 mm Streifenbreite |

Verfahren zur Herstellung von siegelbaren PET-Folien sind bekannt.

In der EP-A-0 379 190 wird eine biaxial orientierte, mehrschichtige Polyesterfolie umfassend eine Trägerschicht aus Polyester und mindestens eine Versiegelungsschicht aus einer Polyester-Zusammensetzung beschrieben. Die Polyesterfolie kann unter Anwendung der Coextrusionstechnologie, der In-Line Beschichtung, der In-Line Laminierung oder unter Anwendung geeigneter Kombinationen der genannten Technologien hergestellt werden. Bei der In-Line Beschichtung werden die Polymere der Versiegelungsschicht in Form einer Dispersion oder Lösung auf die Trägerschicht aufgebracht. Bei der In-Line Laminierung werden die Polymere der Versiegelungsschicht in Form von extrudierter Schmelze auf die Trägerschicht, z. B. zwischen den beiden Streckschritten, aufgebracht.

Die Versiegelungsschicht kann aliphatische und aromatische Dicarbonsäuren sowie aliphatische Diole enthalten. Das Polymer für die Versiegelungsschicht enthält zwei unterschiedliche Polyester A und B, von denen zumindest einer (Polyester B) aliphatische Dicarbonsäuren und/oder aliphatische Diole enthält. Die Versiegelungsenergie, die zwischen zwei sich gegenüberliegenden, miteinander verbundenen Versiegelungsfolienschichten gemessen wird (= Fin-Siegelung), beträgt mehr als $400g_{force} \cdot cm/15\ mm$ (mehr als 4 N · cm/15 mm), wobei die Versiegelungsfolienschicht anorganische und/oder organische feine Teilchen enthalten kann, die im Polyester nicht löslich sind und wobei die feinen Teilchen in einer Menge von 0,1 bis 5 Gew.-% vorhanden sind, bezogen auf das Gesamtgewicht der Versiegelungsfolienschicht. Die Folie zeichnet sich zwar durch gute Peeleigenschaften (mit Plateau-Charakter im Peeldiagramm s. o.) gegen sich selbst aus (d. h. Versiegelungsschicht gegen Versiegelungsschicht), über das Peelverhalten gegen Menüschalen aus APET, CPET und APET/CPET finden sich jedoch keine Hinweise. Insbesondere aber ist die Folie gemäß dieser Erfindung verbesserungswürdig in ihrer Herstell- und ihrer Verarbeitbarkeit.

In der WO A- 96/19333 wird ein Verfahren zur Herstellung peelfähiger Folien beschrieben, bei dem die heißsiegelbare, peelfähige Schicht in-line auf die Polyesterfolie aufgebracht wird. Bei dem Verfahren werden vergleichsweise geringe Mengen von organischen Lösungsmitteln verwendet. Die heißsiegelbare, peelfähige Schicht enthält einen Copolyester, der

| 40 bis 90 Mol-% | einer aromatischen Dicarbonsäure, |
| 10 bis 60 Mol-% | einer aliphatischen Dicarbonsäure, |
| 0,1 bis 10 Mol-% | einer Dicarbonsäure enthaltend eine freie Säuregruppe oder ein Salz davon, |
| 40 bis 90 Mol-% | eines Glykols enthaltend 2 bis 12 Kohlenstoffatome und |
| 10 bis 60 Mol-% | eines Polyalkyldiols |

aufweist.

Die Beschichtung wird aus einer wässrigen Dispersion oder einer Lösung, die bis zu 10 Gew.-% organisches Lösungsmittel enthält, an die Folie angetragen. Das Verfahren ist hinsichtlich der verwendbaren Polymere und der erzielbaren Schichtdicken für die heißsiegelbare, peelfähige Schicht eingeschränkt. Die maximal erreichbare Schichtdicke wird mit 0,5 µm angegeben. Die maximale Siegelnahtfestigkeit ist gering, sie beträgt 500 bis 600 g/25 mm$^2$ bzw. [(500 bis 600)/170] N/15 mm Folienbreite.

In der WO 02/059186 A1 wird ein Verfahren zur Herstellung peelfähiger Folien beschrieben, bei dem die heißsiegelbare, peelfähige Schicht in-line auf die Polyesterfolie aufgebracht wird. Angewendet wird die sogenannte Schmelze-Beschichtung (melt-coating), wobei vorzugsweise die längsgestreckte Folie mit dem heißsiegelbaren, peelfähigen Polymer beschichtet wird. Das heißsiegelbare Polymer enthält Polyester auf Basis von aromatischen und aliphatischen Säuren, sowie auf Basis von aliphatischen Diolen. Die in den Beispielen offenbarten Copolymere haben Glastemperaturen von unter -10 °C; solche Copolyester sind zu weich, weshalb sie sich nicht in üblichen Walzenstreckverfahren orientieren lassen (Kleben an den Walzen). In der WO 02/059186 A1 wird die an sich bekannte Schmelze-Beschichtung von der an sich bekannten Extrusions-Beschichtung technisch und über die Viskosität der Schmelze abgegrenzt. Nachteilig an der Schmelze-Beschichtung ist, dass nur dünnflüssige Polymere (max. 50 Pa · s) mit niedrigem Molekulargewicht verwendet werden können. Daraus resultieren nachteilige Peel-Eigenschaften der Folie. Außerdem ist bei diesem Verfahren die Beschichtungsgeschwindigkeit limitiert, wodurch der Herstellungsprozess unwirtschaftlich wird. Qualitätsmäßig zeigen sich Mängel bei der Optik der Folie, die z. B. als Beschichtungsstreifen sichtbar werden. Auch ist es bei diesem Verfahren schwierig, eine über die Bahnbreite der Folie gleichmäßige Dicke der Siegelschicht zu erhalten, was wiederum zu einer ungleichmäßigen Peelcharakteristik führt.

Aufgabe der vorliegenden Erfindung war es, ein Verfahren zur Herstellung einer heißsiegelbaren und peelfähigen, biaxial orientierten Polyesterfolie bereitzustellen, bei dem eine oder mehrere der vorgenannten Schwierigkeiten überwunden werden. Insbesondere war es das Ziel, einen ökonomischen Prozess für die Herstellung einer heißsiegelbaren und peelfähigen Polyesterfolie zur Verfügung zu stellen, bei dem von vornherein auf die Verwendung von toxikologisch- und Umwelt-bedenklichen Lösungsmittel verzichtet werden kann. Die mittels dem erfindungsgemäßen Verfahren hergestellte Folie sollte sich insbesondere durch hervorragende Peeleigenschaften gegenüber Lebensmittelbehältern (Menüschalen, Becher, etc.) auszeichnen, insbesondere gegenüber solchen aus CPET, APET oder der APET-Seite von Menüschalen aus APET/CPET. Des weiteren war es ein Anliegen der Erfindung, mit Hilfe des erfindungsgemäßen Verfahrens eine Folie zur Verfügung zu stellen, die sich dadurch auszeichnet, dass

a) sie gegenüber CPET oder der APET-Seite von Menüschalen aus APET/CPET eine leichte bis feste Peelbarkeit (easy peel bis medium peel) zeigt. Die Peelkraft sollte im Bereich von 1,5 bis 8 N je 15 mm, bevorzugt im Bereich von 2,0 bis 8 N je 15 mm und besonders bevorzugt im Bereich von 2,5 bis 8 N je 15mm Folienstreifenbreite liegen;
b) in der heißsiegelbaren und peelfähigen Schicht keine organischen Lösemittelrückstände enthalten sind;
c) die heißsiegelbare und peelfähige Schicht gegenüber CPET oder der APET-Seite von APET/CPET Menüschalen eine Mindestsiegeltemperatur von 165 °C, bevorzugt 155 °C, besonders bevorzugt 150 °C aufweist und wobei die max. Siegeltemperatur im Allgemeinen 220 °C, bevorzugt 200 °C und besonders bevorzugt 190 °C beträgt;
d) bei ihrer Herstellung Verfahren angewendet werden, bei denen von vornherein keine organischen Lösemittel verwendet werden;
e) sich die Folie wirtschaftlich herstellen lässt. Dies bedeutet beispielsweise auch, dass zur Herstellung der Folie in der Industrie übliche Streckverfahren eingesetzt werden können. Weiterhin sollte die Folie bei heute üblichen Maschinengeschwindigkeiten bis zu 500 m/min herstellbar sein;
f) eine gute Haftung (bevorzugt größer als 2 N/15 mm Folienbreite) zwischen den einzelnen Schichten der Folie für deren praktische Anwendung gewährleistet ist;
g) die optischen Eigenschaften der Folie gut sind. Dies bedeutet beispielsweise eine niedrige Trübung im Falle einer transparenten Folie (bevorzugt kleiner als 20 %) und einen hohen Glanz ( bevorzugt >70 für die siegelfähige Seite und bevorzugt > 100 für die der siegelfähigen gegenüberliegende Seite; jeweils gemessen bei 20° Einstrahlwinkel) der Folie;

h) bei der Herstellung der Folie gewährleistet ist, dass das Regenerat in einer Menge von bis zu ca. 60 Gew.-% wieder der Extrusion zugeführt werden kann, ohne dass dabei die physikalischen (die Reißfestigkeit der Folie in beiden Richtungen sollte nicht um mehr als 10% abnehmen), insbesondere aber die optischen Eigenschaften der Folie nennenswert negativ beeinflusst werden.

Außerdem sollte dafür Sorge getragen werden, dass die Folie auf schnelllaufenden Maschinen verarbeitet werden kann. Andererseits sollten sich gleichzeitig die bekannten, Polyesterfolien auszeichnende Eigenschaften, nicht verschlechtern. Hierzu gehören beispielsweise die guten mechanischen (der E-Modul der biaxial gestreckten Folien sollte in beiden Orientierungsrichtungen größer als 3500 N/mm$^2$, bevorzugt größer als 3800 N/mm$^2$ und besonders bevorzugt größer als 4200 N/mm$^2$ sein) und die thermischen Eigenschaften (der Schrumpf der biaxial gestreckten Folien sollte in beiden Orientierungsrichtungen bevorzugt nicht größer als 3 %, bevorzugt nicht größer als 2,8 % und besonders bevorzugt nicht größer als 2,5 % sein), das Wickelverhalten und die Verarbeitbarkeit der Folie, insbesondere bei der Bedruckung, Kaschierung oder bei der Beschichtung der Folie mit metallischen oder keramischen Materialien.

Unter heißsiegelbar wird hier die Eigenschaft einer mehrschichtigen, mindestens eine Basisschicht (B) aufweisenden Polyester-Folie verstanden, die zumindest eine Deckschicht (= heißsiegelbare Deckschicht) aufweist, die mittels Siegelbacken durch Anwendung von Wärme (140 bis 220 °C) und Druck (2 bis 5 bar) in einer bestimmten Zeit (0,2 bis 2 s) mit sich selbst (Fin-Siegelung) bzw. mit einem Substrat aus thermoplastischem Kunststoff (= Lap-Siegelung, hier insbesondere mit CPET oder der APET-Seite von APET/CPET-Menüschalen) verbunden werden kann, ohne dass dabei die Trägerschicht (= Basisschicht) selbst plastisch wird. Um dies zu erreichen, besitzt das Polymer der Siegelschicht im Allgemeinen einen deutlich niedrigeren Schmelzpunkt als das Polymer der Basisschicht. Wird als Polymer für die Basisschicht beispielsweise PET mit einem Schmelzpunkt von 254 °C verwendet, so beträgt der Schmelzpunkt der heißsiegelbaren Schicht im Allgemeinen weniger als 230 °C, im vorliegenden Fall bevorzugt weniger als 210 °C und besonders bevorzugt weniger als 190 °C.

Unter peelfähig wird hier die Eigenschaft der erfindungsgemäßen Polyester-Folie verstanden, die zumindest eine Schicht (= heißsiegelbare und peelfähige Deckschicht (A)) aufweist, die nach der Heißsiegelung auf ein Substrat (hier im Wesentlichen CPET oder die APET-Seite einer APET/CPET-Schale) derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf (vgl. auch Ahlhaus, O.E.: Verpackung mit Kunststoffen, Carl Hanser Verlag, S. 271, 1997, ISBN 3-446-17711-6). Beim Abziehen der auf einen Teststreifen des Substrates heißgesiegelten Folie in einem Zug-Dehnungs-Prüfgerät unter einem Schälwinkel von 180° entsprechend Figur 2 wird dann ein Reiß-Dehnverhalten der Folie gemäß Figur 3b erhalten. Bei Beginn des Abschälens der Folie von dem Substrat steigt die dazu erforderliche Kraft gemäß Figur 3b bis zu einem bestimmten Wert (z.B. 4 N/15 mm) an und bleibt dann über den gesamtem Schälweg in etwa konstant, ist allerdings mit mehr oder weniger großen Schwankungen behaftet (ca. ± 20 %).

Gelöst wird die Aufgabe durch die Bereitstellung eines Verfahrens für die Herstellung einer biaxial orientierten Polyesterfolie, welche eine Basisschicht (B) und eine heißsiegelbare und zumindest gegenüber Polyester (insbesondere APET und/oder CPET) peelfähige Deckschicht (A) aufweist, wobei das Verfahren zumindest die folgenden Schritte beinhaltet:

a) Extrusion zumindest einer Basisschichtfolie (B) (= Trägerschichtfolie (B)), die überwiegend aus Polyester aufgebaut ist;

b) Streckung dieser Folie in eine erste Richtung;

c) Streckung dieser Folie in einer zweiten, zur ersten senkrechten Richtung;

d) Hitze-Fixierung der gestreckten Folie;

e) Bilden einer heißsiegelbaren und peelfähigen Deckschicht (A) auf der Basisschichtolie (B) durch Auflaminieren einer in einem eigenen Prozess hergestellten Deckschichtfolie (A) bevorzugt aus Copolyester und bevorzugt mittels paarweise angeordneter Walzen;

wobei der Laminierschritt e) vor Schritt b) oder bevorzugt zwischen den Schritten b) und c) erfolgt; und

wobei die auflaminierte, heißsiegelbare und peelfähige Deckschichtfolie (A) 60 bis 99 Gew.-% Polyester enthält (bezogen auf die Masse von (A)), der zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen, wobei die Summe der dicarbonsäureabgeleiteten Molprozente 100 ergibt.

Die Schichtdicke der Deckschicht (A) $d_A$ beträgt bevorzugt 1,0 bis 7 µm (gemessen an der biaxial orientierten Polyesterfolie).

Die oben genannten Parameter sind jeweils als bevorzugte Werte zu verstehen.

Das Verfahren beruht dabei im Wesentlichen auf der Herstellung einer Basisschichtfolie (B) durch Extrusion und Laminierung einer Deckschichtfolie (A) (diese bildet die heißsiegelbare und peelfähige Deckschicht (A)) auf die Basisschichtfolie (B) mittels Walzentechnologie. Vorzugsweise erfolgt die Laminierung der Deckschichtfolie (A) auf die Basisschichtfolie (B) zwischen dem ersten und dem zweiten Streckschritt. Die Herstellung der resultierenden peelfähigen, biaxial orientierten Polyesterfolie und die Auflaminierung der Deckschichtfolie (A) auf die Basisschichtfolie (B) ist dabei durch folgende bevorzugte Merkmale gekennzeichnet:

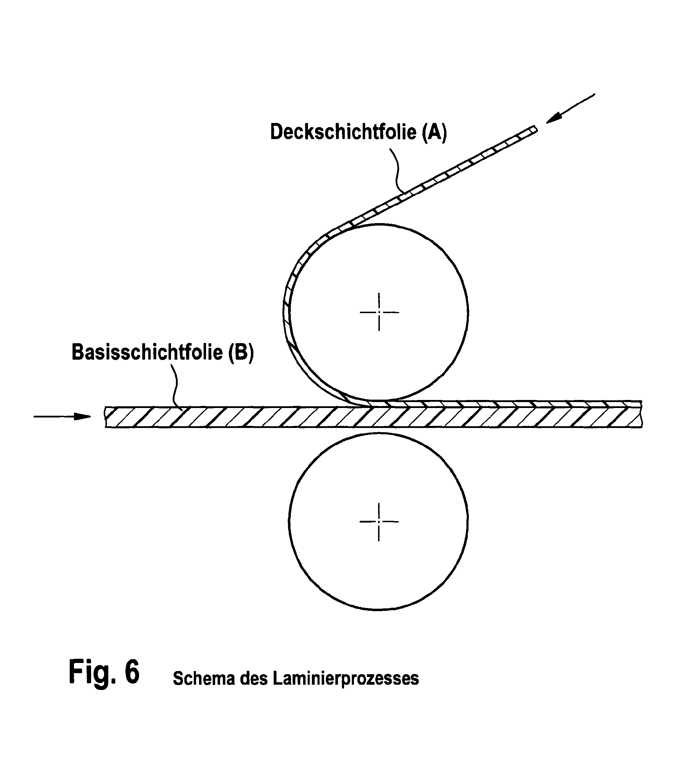

a) Herstellung der unorientierten Deckschichtfolie (A) in einem separaten Schritt über Extrusion oder Coextrusion z.B. als Blasfolie oder als Castfolie. Wickelung und Konfektionierung der unorientierten Folie zu einer Rolle;
b) Abrollung der unorientierten Deckschichtfolie (A) durch einen separaten Wickler und Zuführung der Deckschichtfolie (A) zur Laminierstation, die bevorzugt zwischen dem ersten und zweiten Streckschritt des Herstellungsprozesses der Polyesterbasisschichtfolie (B) angeordnet ist;
c) Auflaminierung der Deckschichtfolie (A) auf die Basisschichtfolie (B) mit Hilfe von Walzen, beispielsweise entsprechend dem in Figur 6 dargestellten Schema;
d) gemeinsame Streckung des Laminates bestehend aus Deckschichtfolie (A) und Basisschichtfolie (B) vorzugsweise in der Querstreckung, wobei die Haftung zwischen den beiden Schichten im Wesentlichen durch die beiden Walzen und die Temperaturen in den Streckaggregaten bereitgestellt wird.

Das Material der Deckschicht (A) bzw. der Deckschichtfolie (A) besteht überwiegend aus einem Polyester. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von bevorzugt 12 bis 89 Mol-%, insbesondere 30 bis 84 Mol-%, besonders bevorzugt 40 bis 82 Mol-%, enthalten. Die auf die aliphatischen Dicarbonsäuren zurückgehenden Einheiten sind in dem Polyester in einer Menge von bevorzugt 11 bis 88 Mol-%, insbesondere 16 bis 70 Mol-%, besonders bevorzugt 18 bis 60 Mol-%, enthalten, wobei die Mol-%-Angaben sich immer zu 100 % ergänzen. Die hierzu korrespondierenden Dioleinheiten ergeben ebenfalls immer 100 Mol-%.

Bevorzugte aliphatische Dicarbonsäuren sind Bernsteinsäure, Pimelinsäure, Korksäure, Azelainsäure, Sebazinsäure, Glutarsäure und Adipinsäure. Insbesondere bevorzugt sind die Azelainsäure, die Sebazinsäure und die Adipinsäure.

Bevorzugte aromatische Dicarbonsäuren sind Terephthalsäure, Isophthalsäure und 2,6-Naphthalindicarbonsäure, insbesondere Terephthalsäure und Isophthalsäure.

Bevorzugte Diole sind Ethylenglykol, Butylenglykol und Neopentylglykol.

Im Allgemeinen beinhaltet der Polyester die folgenden Dicarboxylate und Alkylene, jeweils bezogen auf die Gesamtdicarboxylat- bzw. Gesamtalkylenmenge:

12 bis 89 Mol-%, bevorzugt 25 bis 79 Mol-% und besonders bevorzugt 30 bis 72 Mol-% Terephthalat;
0 bis 25 Mol-%, bevorzugt 5 bis 20 Mol-% und besonders bevorzugt 10 bis 20 Mol-% Isophthalat;
11 bis 88 Mol -%, bevorzugt 16 bis 70 Mol-% und besonders bevorzugt 17 bis 58 Mol-% Azelat;
0 bis 50 Mol-%, bevorzugt 0 bis 40 Mol-% und besonders bevorzugt 0,2 bis 30 Mol-% Sebazat;
0 bis 50 Mol-%, bevorzugt 0 bis 40 Mol-% und besonders bevorzugt 0 bis 30 Mol-% Adipat;

mehr als 30 Mol -%, bevorzugt mehr als 40 Mol-% und besonders bevorzugt mehr als 50 Mol-% Ethylen oder Butylen.

Darüber hinaus kann das Material der Deckschicht(A) bis zu 10 Gew.-% , an weiteren Additiven, Hilfsmitteln und/oder sonstigen in der Polyesterfolientechnologie üblicherweise verwendeten Zusatzstoffen enthalten.

In einer günstigen Ausführungsform enthält darüber hinaus das Material der Deckschicht(A) zu 2 bis 30 Gew.-%, bevorzugt 5 bis 25 Gew.-% und besonders bevorzugt 7 bis 20 Gew.-% ein Polymer, welches mit Polyester unverträglich ist (anti-PET-Polymer).

Es hat sich als zweckmäßig erwiesen, den Hauptpolyester der Deckschicht (A) aus zwei getrennten Polyestern I und II herzustellen, die dem(den) Extruder(Extrudern) für die Bildung dieser Schicht (Folie) als Mischung zugeführt werden.

Die heißsiegelbare und peelfähige Deckschicht (A) zeichnet sich durch charakteristische Merkmale aus. Sie besitzt eine Siegelanspringtemperatur (= Mindestsiegeltemperatur) gegenüber CPET oder der APET-Seite von APET/CPET-Menüschalen von nicht mehr als 165 °C, bevorzugt nicht mehr als 160 °C und besonders bevorzugt nicht mehr als 155 °C und eine Siegelnahtfestigkeit gegenüber CPET oder der APET-Seite von APET/CPET Menüschalen von mindestens 1,5 N, bevorzugt mindestens 2,0 N, besonders bevorzugt mindestens 2,5 N (immer bezogen auf 15 mm Folienbreite). Die heißsiegelbare und peelfähige Deckschicht (A) hat gegenüber CPET oder der APET-Seite von APET/CPET-Menüschalen eine max. Siegeltemperatur von im Allgemeinen 220 °C, bevorzugt 200 °C und besonders bevorzugt 190 °C, wobei im gesamten Siegelbereich eine gegenüber CPET oder der APET-Seite von APET/CPET-Menüschalen peelfähige Folie erhalten wird. D. h. mit dieser Folie wird beim 180°-Zugversuch gemäß Figur 2 eine Kurve gemäß Figur 3b erhalten. Der Begriff Menüschalen ist gleichzusetzen mit Materialien allgemein.

Für die bevorzugten, oben angegebenen Bereiche lassen sich die Peelergebnisse auch zahlenmäßig beschreiben. Entsprechend den vorliegenden experimentellen Untersuchungen können die Peelergebnisse einfach durch folgenden Zusammenhang zwischen der Siegeltemperatur (T = δ in °C) und der Peelkraft (in N/15 mm) miteinander korreliert werden

$$0,02 \cdot \vartheta \, / \, °C - 0,8 \leq \mathit{PeelkraftF} \, / \, N \, \mathit{je} \, 15 \, \mathit{mm} \leq 0,033 \cdot \vartheta \, / \, °C + 1,4$$

Dieser Zusammenhang ist graphisch zur Veranschaulichung in Figur 5 dargestellt.

Die biaxial orientierte Polyesterfolie nach der vorliegenden Erfindung weist eine Basisschicht (B) und mindestens eine erfindungsgemäße, auf die Basisschicht (B) auflaminierte Deckschichtfolie (A) auf. In diesem Fall ist die resultierende biaxial orientierte peelfähige Polyesterfolie zweischichtig aufgebaut. In einer bevorzugten Ausführungsform ist die Folie drei - oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C); Folienaufbau A-B-C. Hierbei ist es zweckmäßig, die beiden Schichten (B) und (C) über die Coextrusionstechnologie herzustellen. Bei einer vierschichtigen Ausführungsform enthält die Folie eine Zwischenschicht (D) zwischen der Basisschicht (B) und der Deckschicht (A) oder (C). In diesem Falle ist es wiederum zweckmäßig, die Schichten (B), (C) und (D) über die Coextrusionstechnologie herzustellen. Liegt in dem coextrudierten Schichtverbund (B), (C) und (D) die Zwischenschicht (D) zwischen der auflaminierten Deckschichtfolie (A) und der Basisschicht (B), so ist es zweckmäßig, diese (D) aus dem weiter unten näher beschriebenen Polyester I aufzubauen. Dieser gewährleistet insbesondere eine bessere Haftung zu der auflaminierten Folie (A).

Die Deckschichtfolie (A) ist in der Regel einschichtig, kann daneben aber auch mehrschichtig aufgebaut sein. In diesem Fall besteht sie beispielsweise aus den Schichten (A') und (A"), wobei die Schicht (A') dass siegelbare und peelfähige, bevorzugte Polyestercopolymer enthält. Die zweite, vorzugsweise zusammen mit der Schicht (A') coextrudierte Schicht (A") kann z. B. aus dem Polyester für die Basisschichtfolie (B) oder aber aus dem weiter unten näher beschriebenen Polyester I aufgebaut werden.

Die Basisschicht der Folie besteht bevorzugt zu mindestens 80 Gew.-% aus thermoplastischem Polyester, bezogen auf das Gewicht der Basisschicht (B). Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalatoder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homo- und/oder Copolymeren verwendet werden. Bei der Angabe der Mengen für die Dicarbonsäuren bildet die Gesamtmenge aller Dicarbonsäuren 100 Mol-%. Analog bildet die Gesamtmenge aller Diole auch 100 Mol-%.

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Besonders vorteilhaft ist es, wenn in der Basisschicht (B) ein Polyester-Copolymer auf Basis von Terephthalat und geringen Mengen (bevorzugt < 5 Mol-%) Isophthalsäure oder auf Basis von Terephthalat und geringen Mengen (bevorzugt < 5 Mol-%) Naphthalin-2,6-dicarbonsäure verwendet wird. In diesem Fall sind die Herstellbarkeit der Folie und die optischen Eigenschaften der Folie besonders gut. Die Basisschicht (B) enthält dann im Wesentlichen ein Polyestercopolymeres, das überwiegend aus Terephthalsäure und Isophthalsäure -Einheiten und/oder Terephthalsäure- und Naphthalin-2,6-dicarbonsäure-Einheiten und aus Ethylenglykol-Einheiten zusammengesetzt ist. Die besonders bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind.

Die Herstellung der Polyester kann z. B. nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid, Titanoxide oder Ester sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie nach der vorliegenden Erfindung ist zu mindest zweischichtig aufgebaut. Sie besteht dann aus der Basisschicht (B) und der auf dieser durch Walzenlaminierung aufgebrachten erfindungsgemäßen, siegelbaren und peelfähigen Deckschichtfolie (A).

Die bevorzugt durch Walzenlaminierung auf die Basisschicht (B) aufgebrachte siegelbare und peelfähige Deckschichtfolie (A) ist überwiegend, d.h. bevorzugt zu mindestens 60 Gew.-% aus Polyestern aufgebaut.

Erfindungsgemäß enthält die heißsiegelbare und peelfähige Deckschichtfolie (A) Polyester auf Basis von aromatischen und aliphatischen Säuren und bevorzugt aliphatischen Diolen.

Unter den Polyestern werden in der bevorzugten Ausführungsform Copolyester oder Blends aus Homo- und Copolyestern oder Blends aus verschiedenen Copolyestern verstanden, die auf Basis von aromatischen und aliphatischen Dicarbonsäuren und aliphatischen Diolen aufgebaut sind.

Beispiele für die erfindungsgemäß einsetzbaren aromatischen Dicarbonsäuren sind die Terephthalsäure, die Isophthalsäure, die Phthalsäure und die 2,6-Naphthalindicarbonsäure.

Beispiele für die erfindungsgemäß einsetzbaren aliphatischen Dicarbonsäuren sind die Bernsteinsäure, die Glutarsäure, die Adipinsäure, die Pimelinsäure, die Korksäure, die Azelainsäure und die Sebazinsäure.

Beispiele für die erfindungsgemäß einsetzbaren aliphatischen Diole sind Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol und 1,4-Cyclohexandimethanol.

Der Polyester für die Deckschicht (A) wird bevorzugt aus zwei Polyestern I und II hergestellt.

Der Anteil des Polyesters I, der aus einem oder mehreren aromatischen Dicarboxylaten und einem oder mehreren aliphatischen Alkylenen besteht, in der Deckschicht (A) beträgt bevorzugt 0 bis 50 Gew.-%. In der bevorzugten Ausführungsform beträgt der Anteil des Polyesters I 5 bis 45 Gew.-% und in der besonders bevorzugten Ausführungsform beträgt er 10 bis 40 Gew.-%.

Im Allgemeinen basiert der Polyester I der erfindungsgemäßen Deckschicht (A) auf den folgenden Dicarboxylaten und Alkylenen, jeweils bezogen auf die Gesamtdicarboxylat- bzw. Gesamtalkylenmenge:

70 bis 100 Mol-%, bevorzugt 72 bis 95 Mol-% und besonders bevorzugt 74 bis 93 Mol-% Terephthalat; 0 bis 30 Mol-%, bevorzugt 5 bis 28 Mol-% und besonders bevorzugt 7 bis 26 Mol-% Isophthalat;

mehr als 50 Mol-%, bevorzugt mehr als 65 Mol-% und besonders bevorzugt mehr als 80 Mol-% Ethyleneinheiten.

Eventuell vorhandene restliche Anteile stammen von anderen aromatischen Dicarbonsäuren und anderen aliphatischen Diolen, wie sie bereits zuvor für die Basisschicht (B) aufgelistet worden sind.

Ganz besonders bevorzugt sind solche Copolyester, bei denen der Anteil an Terephthalat-Einheiten 74 bis 88 Mol-%, der entsprechende Anteil an Isophthalat-Einheiten 12 bis 26 Mol-% (wobei die Dicarboxylatanteile sich zu 100 Mol-% ergänzen) und der Anteil an Ethyleneinheiten 100 Mol-% beträgt. D. h. es handelt sich um Polyethylen- terephthalat/isophthalat.

In einer weiteren bevorzugten Ausführungsform besteht der Polyester I aus einer Mischung, welche einen Copolyester, aufgebaut aus Terephthalat-, Isophthalat- und aus Ethylen-Einheiten, und ein aromatisches Polyesterhomopoymeres, z. B. ein Polybutylenterephthalat, enthält.

Entsprechend der vorliegenden Erfindung beträgt der Anteil von Polyester II in der Deckschicht (A) bevorzugt 50 bis 100 Gew.-%. In der bevorzugten Ausführungsform beträgt der Anteil von Polyester II 55 bis 95 Gew.-% und in der besonders bevorzugten Ausführungsform beträgt er 60 bis 90 Gew.-%.

Bevorzugt besteht der Polyester II aus einem Copolymeren aus aliphatischen und aromatischen Säurekomponenten, bei welchem die aliphatischen Säurekomponenten bevorzugt 20 bis 90 Mol-%, insbesondere 30 bis 70 Mol- % und besonders bevorzugt 35 bis 60 Mol-% betragen, bezogen auf die Gesamtsäuremenge des Polyesters II. Der zu 100 Mol-% fehlende Dicarboxylatanteil stammt von aromatischen Säuren, bevorzugt der Terephthalsäure und/oder der Isophthalsäure sowie auf der glykolischen Seite von aliphatischen oder cycloaliphatischen oder aromatischen Diolen, wie sie bereits oben bezüglich der Basisschicht ausführlich beschrieben wurden.

Im Allgemeinen basiert der Polyester II der erfindungsgemäßen Deckschicht (A) bevorzugt zumindest auf den folgenden Dicarboxylaten und Alkylenen, jeweils bezogen auf die Gesamtdicarboxylat- bzw. Gesamtalkylenmenge:

20 bis 90 Mol -%, bevorzugt 30 bis 70 Mol-% und besonders bevorzugt 35 bis 60 Mol-% Azelat; 0 bis 50 Mol-%, bevorzugt 0 bis 45 Mol-% und besonders bevorzugt 0 bis 40 Mol-% Sebazat;

0 bis 50 Mol-%, bevorzugt 0 bis 45 Mol-% und besonders bevorzugt 0 bis 40 Mol-% Adipat;

10 bis 80 Mol-%, bevorzugt 20 bis 70 Mol-% und besonders bevorzugt 30 bis 60 Mol-% Terephthalat;

0 bis 30 Mol-%, bevorzugt 3 bis 25 Mol-% und besonders bevorzugt 5 bis 20 Mol-% Isophthalat;

mehr als 30 Mol-%, bevorzugt mehr als 40 Mol-% und besonders bevorzugt mehr als 50 Mol-% Ethylen oder Butylen.

Eventuell vorhandene restliche Anteile stammen von anderen aromatischen Dicarbonsäuren und anderen aliphatischen Diolen, wie sie bereits zuvor für die Basisschicht (B) aufgelistet worden sind, oder auch von Hydroxycarbonsäuren wie Hydroxybenzoesäure o. ä.

Durch das Vorhandensein von bevorzugt mindestens 10 Mol-% aromatischer Dicarbonsäure wird gewährleistet, dass das Polymer II ohne Verklebungen, z. B. im Einzugsbereich des Extruders, für die Folie (A) verarbeitbar ist.

Bevorzugt enthält die Deckschicht (A) eine Mischung aus den Polyestern I und II. Gegenüber der Verwendung von nur einem Polyester mit vergleichbaren Komponenten und vergleichbaren Anteilen der Komponenten weist eine Mischung die folgenden Vorteile auf:

a) Die Mischung der beiden Polyester I und II ist von den jeweiligen Glasübergangstemperaturen ($T_g$) gesehen leichter zu verarbeiten (zu extrudieren). Wie Untersuchungen gezeigt haben, neigt die Mischung aus einem Polymeren mit einem hohen $T_g$ (Polyester I) und einem Polymeren mit einem niedrigen $T_g$ (Polyester II) weniger zum Verkleben im Coextruder als ein einziges Polymer mit einer entsprechend gemischten $T_g$.

b) Die Polymerherstellung ist einfacher, weil man in der Regel nicht beliebig viele Dosierstationen für die Ausgangsstoffe zur Verfügung hat.

c) Außerdem können mit der Mischung praktisch gesehen die gewünschten Peeleigenschaften individueller eingestellt werden als bei Einsatz eines einzigen Polyesters.

d) Auch die Zugabe von Partikeln (siehe unten) gestaltet sich bei Polyester I einfacher als bei Polyester II.

Zweckmäßigerweise beträgt die Glasübergangstemperatur von Polyester I mehr als 50 °C. Bevorzugt beträgt die Glasübergangstemperatur von Polyester I mehr als 55 °C und besonders bevorzugt mehr als 60 °C. Ist die Glasübergangstemperatur von Polyester I kleiner als 50 °C, kann die Folie unter Umständen nicht verfahrenssicher hergestellt werden. Die Klebeneigung der Folie (A) z. B. gegenüber den metallischen Wänden des Extruders kann dabei so groß sein, dass mit Verstopfungen im Extruder gerechnet werden muss.

Zweckmäßigerweise beträgt die Glasübergangstemperatur von Polyester II weniger als 20 °C. Bevorzugt beträgt die Glasübergangstemperatur weniger als 15 °C und besonders bevorzugt weniger als 10 °C. Ist die Glasübergangstemperatur von Polyester II größer als 20 °C, so neigt die Folie beim Abziehen von der Menüschale vermehrt zum Einreißen oder zum Abreißen, was unerwünscht ist.

In einer weiteren zweckmäßigen Ausgestaltung der Erfindung enthält die heißsiegelbare und peelfähige Deckschicht (A) ein mit Polyester unverträgliches Polymer (anti-PET-Polymer). Der Anteil des polyesterunverträglichen Polymeren (anti-PET-Polymer) beträgt dann bevorzugt 2 bis 30 Gew.-%, bezogen auf die Masse der Deckschicht (A). In einer bevorzugten Ausführungsform beträgt der Anteil des Polymeren 5 bis 25 Gew.-% und in der besonders bevorzugten Ausführungsform beträgt er 7 bis 20 Gew.-%, ebenfalls bezogen auf die Masse der Deckschicht (A).

Beispiele für geeignete unverträgliche Polymere (anti-PET-Polymer) sind Polymere auf Basis von Ethylen (z. B. LLDPE, HDPE), Propylen (PP), Cycloolefinen (CO), Amiden (PA) oder Styrol (PS). In einer bevorzugten Ausführungsform wird als polyesterunverträgliches Polymer (anti-PET-Polymer) ein Copolymeres verwendet. Beispiele hierfür sind Copolymere auf Basis von Ethylen (C2/C3, C2/C3/C4- Copolymere), Propylen (C2/C3, C2/C3/C4- Copolymere), Butylen (C2/C3, C2/C3/C4- Copolymere) oder auf Basis von Cycloolefinen (Norbornen/Ethylen-, Tetracyclododecen/Ethylen-Copolymere). In einer der besonders bevorzugten Ausführungsformen ist das mit Polyester unverträgliche Polymer (anti-PET-Polymer) ein Cycloolefincopolymer (COC). Solche Cycloolefincopolymere sind beispielsweise in der EP-A-1 068 949 oder in der JP 05-009319 beschrieben, auf die hier Bezug genommen wird.

Unter den Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere (COC), die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die Cycloolefinpolymere weisen im Allgemeinen Glasübergangstemperaturen zwischen -20 und 400 °C auf. Für die Erfindung sind solche Cycloolefincopolymerisate (COC) besonders geeignet, die eine Glasübergangstemperatur von kleiner als 160 °C, bevorzugt kleiner als 120 °C und besonders bevorzugt kleiner als 80 °C aufweisen. Vorzugsweise sollte die Glasübergangstemperatur oberhalb von 50 °C liegen, bevorzugt oberhalb von 55 °C, insbesondere oberhalb von 60 °C. Die Viskositätszahl (Dekalin, 135 °C, DIN 53 728) liegt zweckmäßigerweise zwischen 0,1 und 200 ml/g, bevorzugt zwischen 50 und 150 ml/g. Folien, die ein COC mit einer Glasübergangstemperatur von kleiner als 80 °C enthalten, zeichnen sich gegenüber solchen, die ein COC mit einer Glasübergangstemperatur von größer 80 °C enthalten, durch verbesserte optische Eigenschaften, insbesondere durch eine niedrigere Trübung aus.

Die Herstellung der Cycloolefincopolymere (COC) geschieht z. B. durch eine heterogene oder homogene Katalyse mit metallorganischen Verbindungen und ist in einer Vielzahl von Dokumenten beschrieben. Geeignete Katalysatorsysteme, basierend auf Mischkatalysatoren aus Titan- bzw. Vanadiumverbindungen in Verbindung mit Aluminiumorganylen, werden in der DD 109 224, DD 237 070 und der EP-A-0 156 464 beschrieben.

EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COCs sind käuflich erhältlich; z. B. Topas@ (Ticona, Frankfurt).

Beträgt der Anteil des polyesterunverträglichen Polymeren (anti-PET-Polymer) weniger als 2 Gew.-%, bezogen auf die Masse der Deckschicht (A), so ist ein positiver Einfluss des Polymeren auf das Abziehverhalten der Folie von der Menüschale unter Umständen nicht gegeben. Beim Abziehen der Folie von der Menüschale kann diese nach wie vor zum Einreißen oder zum Abreißen neigen. Insbesondere bei höheren Siegeltemperaturen (> 160 °C) kommt dieser Effekt durch die Zugabe von polyesterunverträglichem Polymer (anti-PET-Polymer) besonders deutlich zum Tragen. Erfindungsgemäß hergestellte Folien reißen beim Abziehen von der Menüschale auch dann nicht ein oder ab. Andererseits sollte der Anteil von polyesterunverträglichem Polymer (anti-PET-Polymer) 30 Gew.-% nicht überschreiten, da die Trübung der Folie sonst zu hoch wird.

Zur Verbesserung der Handhabung der Folie, der Verarbeitbarkeit der Folie, insbesondere aber auch zur Verbesserung des Abziehverhaltens der Folie von der Menüschale ist es von Vorteil, die heißsiegelbare und peelfähige Deckschicht (A) weiter zu modifizieren.

Dies geschieht am Besten mit Hilfe von geeigneten Antiblockmitteln (Partikel), die der Siegelschicht gegebenenfalls zugegeben werden und zwar in Mengen, dass sich das Abziehverhalten der Folie von der Menüschale weiter verbessert, ein Verblocken der Folie verhindert und das Verarbeitungsverhalten der Folie optimiert wird.

Es hat sich als günstig erwiesen, dass zumindest die Deckschicht (A) Partikel in einer bestimmten Größe, in einer bestimmten Konzentration und in einer bestimmten Verteilung beinhaltet. Daneben können auch Mischungen von zwei und mehreren verschiedenen Partikelsystemen oder Mischungen von Partikelsystemen in gleicher chemischer Zusammensetzung, aber unterschiedlicher Partikelgröße der Deckschicht (A) zugegeben werden.

Übliche Antiblockmittel (auch als "Pigmente" oder "Partikel" bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel. Die Partikel können der Schicht in den jeweils vorteilhaften Konzentrationen, z. B. als glykolische Dispersion während der Polykondensation oder über Masterbatche bei der Extrusion, zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden und erzeugen nur wenige Vakuolen (Hohlräume). Vakuolen entstehen an den Partikeln bei der biaxialen Orientierung, verursachen im Allgemeinen Trübung und sind daher für die vorliegende Erfindung nicht erwünscht. Zur (synthetischen) Herstellung der $SiO_2$-Partikel (auch Silicagel genannt) werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann das Hydrogel getrocknet und weiterverarbeitet werden. Durch Kontrolle des Waschwasser-pH-Wertes und der Trocknungsbedingungen können die wichtigen physikalischen Parameter wie z. B. Porenvolumen, Porengröße und die Größe der Oberfläche des anfallenden Silikagels variiert werden. Die gewünschte Partikelgröße (z. B. den $d_{50}$-Wert) und die gewünschte Partikelgrößenverteilung (z. B. die SPAN98) erhält man durch geeignete Mahlung des Silikagels (z. B. mechanisch oder hydromechanisch). Solche Partikel können z. B. über die Firmen Grace, Fuji, Degussa oder Ineos bezogen werden.

Es hat sich als besonders vorteilhaft erwiesen, Teilchen mit einem mittleren Partikeldurchmesser $d_{50}$ von 2,0 bis 8 µm, bevorzugt von 2,5 bis 7 µm und besonders bevorzugt von 3,0 bis 6 µm zu verwenden. Bei der Verwendung von Teilchen mit einem Durchmesser, der unterhalb 2,0 µm liegt, ist ein positiver Einfluss der Partikel auf das Abziehverhalten der Folie von der Menüschale unter Umständen nicht gegeben. In diesem Fall neigt die Folie beim Abziehen von der Menüschale wiederum zum Ein- oder Weiterreißen, was natürlich unerwünscht ist. Teilchen mit einem Durchmesser größer als 8 µm verursachen in der Regel Filterprobleme.

In einer weiteren bevorzugten Ausführungsform ist in Deckschicht (A) der Durchmesser $d_{50}$ der Partikel größer als die Dicke dieser Schicht. Es hat sich als günstig erwiesen, ein Durchmesser/Schichtdicken-Verhältnis von bevorzugt mindestens 1,1, insbesondere mindestens 1,3 und besonders bevorzugt mindestens 1,5 zu wählen. In diesen Fällen ist ein besonders positiver Einfluss der Partikel auf das Abziehverhalten der Folie von der Menüschale gegeben.

Zur Bereitstellung der gewünschten Peeleigenschaften hat es sich als besonders günstig erwiesen, wenn die heißsiegelbare und peelfähige Deckschicht (A) Partikel in einer Konzentration von 1,0 bis 10 Gew.-% enthält. Bevorzugt beträgt die Konzentration der Partikel 2,5 bis 10,0 Gew.-% und besonders bevorzugt 4,0 bis 10,0 Gew.-%. Enthält die Deckschicht (A) der Folie dagegen Partikel in einer Konzentration von weniger als 1,0 Gew.-%, so ist ein positiver Einfluss auf das Abziehverhalten der Folie von der Menüschale in der Regel nicht mehr gegeben. Enthält dagegen die Deckschicht (A) der Folie Partikel in einer Konzentration von mehr als 10 Gew.-%, so wird die Trübung der Folie zu groß.

Es hat sich als besonders vorteilhaft erwiesen, in der heißsiegelbaren und peelfähigen Deckschicht (A) Partikel zu verwenden, deren Verteilung für den Partikeldurchmesser eine Streuung aufweist, die durch einen SPAN98 von ≤ 2,0 beschrieben wird (Definition des SPAN98, siehe Messvorschrift). Bevorzugt ist ein SPAN98 von ≤ 1,9 und besonders bevorzugt ist ein SPAN98 von ≤ 1,8. Enthält die Deckschicht (A) der Folie dagegen Partikel, deren SPAN98 größer als 2,0 ist, so werden die optischen Eigenschaften und die Siegeleigenschaften der Folie schlechter.

Weiterhin hat es sich als vorteilhaft erwiesen, die Rauhigkeit der heißsiegelbaren und peelfähigen Deckschicht (A) so einzustellen, dass ihr $R_a$-Wert bevorzugt größer als 60 nm ist. Insbesondere ist die Rauhigkeit $R_a$ größer als 80 nm und besonders bevorzugt ist sie größer als 100 nm; die Obergrenze der Rauhigkeit sollte 400 nm, bevorzugt 350 nm, insbesondere 300 nm nicht überschreiten. Dies kann durch die Auswahl der Partikel-/Durchmesser, deren Konzentration und die Variation der Schichtdicke gesteuert werden.

Um das Verarbeitungsverhalten der Folie nach der vorliegenden Erfindung weiterhin zu verbessern, ist es von Vorteil, in die Basisschicht (B) bei einem zweischichtigen Folienaufbau (AB) bzw. in die nicht siegelfähige Deckschicht (C) bei einem dreischichtigen Folienaufbau (ABC) ebenfalls Partikel einzuarbeiten, wobei bevorzugt folgende Bedingungen eingehalten werden sollten:

a) Die Partikel sollten einen mittleren Partikeldurchmesser $d_{50}$ (= Median) von 1,5 bis 6 µm aufweisen. Es hat sich dabei als besonders zweckmäßig erwiesen, Teilchen mit einem mittleren Partikeldurchmesser $d_{50}$ von 2,0 bis 5 µm und besonders bevorzugt von 2,5 bis 4 µm zu verwenden.

b) Die Partikel sollten in einer Konzentration von 0,1 bis 1,0 Gew.-% vorhanden sein. Bevorzugt beträgt die Konzentration der Partikel 0,12 bis 1,0 Gew.-% und besonders bevorzugt 0,15 bis 1,0 Gew.-%.

Zur Erzielung der vorgenannten Eigenschaften, insbesondere der optischen Eigenschaften der siegelbaren und peelfähigen Folie hat es sich insbesondere bei einer dreischichtigen Folie mit ABC-Aufbau als zweckmäßig erwiesen, die Menge an Partikeln in der Basisschicht (B) niedriger einzustellen als in Deckschicht (A). Bei der dreischichtigen Folie vom genannten Typ sollte zweckmäßiger Weise in der Basisschicht (B) die Menge der Partikel zwischen 0 und 2,0 Gew.-% liegen, vorzugsweise zwischen 0 und 1,5 Gew.-%, insbesondere zwischen 0 und 1,0 Gew.-%. Als besonders zweckmäßig hat es sich erwiesen, in die Basisschicht nur Partikel einzuarbeiten, wie sie über das arteigene Regenerat (Rezyklat) in die Folie gelangen. Die optischen Eigenschaften der Folie, insbesondere die Trübung der Folie, sind dann besonders gut.

In einer alternativen Ausführungsform enthält die Basisschicht (B) und/oder ggf. eine andere zusätzliche Schicht mindestens ein Weißpigment und optional einen optischen Aufheller.

Geeignete Weißpigmente sind vorzugsweise Titandioxid, Bariumsulfat, Calciumcarbonat, Kaolin, Siliciumdioxid, wobei Titandioxid und Bariumsulfat bevorzugt sind.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z. B. nach dem Chlorid- oder dem Sulfat-Prozess, hergestellt werden. Ihre Menge in der Basisschicht beträgt zweckmäßigerweise 3 bis 20,0 Gew.-%, vorzugsweise 4 bis 18,0 Gew.-% und insbesondere 5 bis 16,0 Gew.-%, bezogen auf das Gewicht der Basisschicht. Die mittlere Teilchengröße ist relativ klein und liegt vorzugsweise im Bereich von 0,10 bis 0,30 µm.

Die Folie enthält gegebenenfalls anstelle von Titandioxid Bariumsulfat als Pigment, wobei die Konzentration des Bariumsulfats vorzugsweise zwischen 0,1 Gew.-% und 25 Gew.-%, besonders bevorzugt zwischen 0,2 und 23 Gew.-%, insbesondere zwischen 0,3 und 22 Gew.-%, bezogen auf das Gewicht der Basisschicht, liegt. Vorzugsweise wird auch das Bariumsulfat über die sogenannte Masterbatch-Technologie direkt bei der Folienherstellung zudosiert.

In einer weiteren bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36 und Nr. 11, 31-36 (1974) beschrieben sind, hergestellt werden.

Die mittlere Teilchengröße ist relativ klein und liegt vorzugsweise im Bereich von 0,1 bis 5 µm, besonders bevorzugt im Bereich von 0,2 bis 3 µm. Die Dichte des verwendeten Bariumsulfates liegt bevorzugt zwischen 4 und 5 g/cm$^3$.

Die Folie enthält optional einen optischen Aufheller, wobei der optische Aufheller in Mengen von bevorzugt 0 bis 5 Gew.-%, insbesondere von 0,002 bis 3 Gew.-%, besonders bevorzugt von 0,005 bis 2,5 Gew.-%, bezogen auf das Gewicht der Basisschicht, eingesetzt wird. Vorzugsweise wird auch der optische Aufheller über die sogenannte Masterbatch-Technologie direkt bei der Folienherstellung zudosiert.

Die erfindungsgemäßen optischen Aufheller sind in der Lage, UV-Strahlen im Bereich von 360 bis 380 nm zu absorbieren und als längerwelliges, sichtbares blauviolettes Licht wieder abzugeben. Geeignete optische Aufheller sind z. B. Bis-benzoxazole, Phenylcumarine und Bis-sterylbiphenyle, insbesondere Phenylcumarin, besonders bevorzugt sind Triazinphenylcumarin (Tinopal® , Ciba-Geigy, Basel, Schweiz), Hostalux® KS (Clariant, Deutschland) sowie Eastobrite OB-1 (Eastman).

Die erfindungsgemäße Folie enthält vorzugsweise 0,0010 bis 5 Gew.-% eines optischen Aufhellers, der in dem kristallisierbaren Thermoplasten löslich ist.

Sofern zweckmäßig können neben dem optischen Aufheller auch noch in Polyester lösliche blaue Farbstoffe zugesetzt werden. Als geeignete blaue Farbstoffe haben sich z. B. Kobaltblau, Ultramarinblau und Anthrachinonfarbstoffe, insbesondere Sudanblau 2 (BASF, Ludwigshafen, Bundesrepublik Deutschland) erwiesen.

Die blauen Farbstoffe werden in Mengen von bevorzugt 10 bis 10.000 ppm, insbesondere 20 bis 5.000 ppm, besonders bevorzugt 50 bis 1.000 ppm, bezogen auf das Gewicht des kristallisierbaren Thermoplasten, eingesetzt.

Erfindungsgemäß können Titandioxid oder das Bariumsulfat, der optische Aufheller und gegebenenfalls der blaue Farbstoff bereits beim Thermoplast-Rohstoffhersteller zudosiert werden oder bei der Folienherstellung über Masterbatch-Technologie in den Extruder dosiert werden.

Besonders bevorzugt ist die Zugabe des Titandioxids oder des Bariumsulfats, des optischen Aufhellers und gegebenenfalls des blauen Farbstoffes über die Masterbatchtechnologie. Die Additive werden in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, in Frage.

Vorteilhaft ist, wenn die Korngröße und das Schüttgewicht des/der Masterbatches ähnlich der Korngröße und dem Schüttgewicht des Thermoplasten sind, so dass eine homogene Verteilung und damit eine homogener Weißgrad und somit eine homogene Opazität erreicht werden.

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht die Zwischenschicht aus den für die Basisschicht verwendeten Polyestern. Die Zwischenschicht kann auch die unten beschriebenen üblichen Additive enthalten. Die Dicke der Zwischenschicht ist im Allgemeinen größer als 0,3 µm und liegt vorzugsweise im Bereich von 0,5 bis 15 µm, insbesondere im Bereich von 1,0 bis 10 µm, besonders bevorzugt im Bereich von 1,0 bis 5 µm.

Bei der zweischichtigen und der besonders vorteilhaften dreischichtigen Ausführungsform der erfindungsgemäßen biaxial orientierten Polyesterfolie liegt die Dicke der Deckschicht (A) bevorzugt im Bereich von 1,0 bis 7,0 µm, insbesondere im Bereich von 1,3 bis 6,5 µm und besonders bevorzugt im Bereich von 1,6 bis 6,0 µm. Beträgt die Dicke der Deckschicht (A) mehr als 7,0 µm, so wächst die Peelkraft deutlich an und liegt nicht mehr im bevorzugten Bereich. Darüber hinaus wird das Peelverhalten der Folie beeinträchtigt. Beträgt die Dicke der Deckschicht (A) dagegen weniger 0,8 µm, so ist die Folie in der Regel nicht mehr heißsiegelbar.

Die Dicke der anderen, nicht siegelbaren Deckschicht (C) kann gleich der Deckschicht (A) sein oder von dieser verschieden; ihre Dicke liegt im Allgemeinen zwischen 0,5 und 5 µm.

Die Gesamtdicke der erfindungsgemäßen Polyesterfolie kann innerhalb weiter Grenzen variieren. Sie beträgt bevorzugt 3 bis 200 µm, insbesondere 4 bis 150 µm, vorzugsweise 5 bis 100 µm, wobei die Schicht (B) einen Anteil von vorzugsweise 45 bis 97 % an der Gesamtdicke hat.

Die Basisschicht und die anderen Schichten können zusätzlich übliche Additive wie z. B. Stabilisatoren (UV, Hydrolyse), flammhemmende Stoffe oder Füller enthalten. Sie werden zweckmäßig dem Polymer bzw. der Polymermischung bereits vor dem Aufschmelzen zugesetzt.

Gegenstand der vorliegenden Erfindung ist ein Verfahren zur Herstellung der Folie.

Zur Herstellung der erfindungsgemäßen heißsiegelbaren und peelfähigen Deckschichtfolie (A) werden zweckmäßiger Weise die jeweiligen Polymere (Polyester I, Polyester II, ggf. weitere Polymere wie polyesterunverträgliches Polymer [anti-PET-Polymer], Masterbatch(e) für Partikel etc.) direkt dem Extruder zugeführt. Die Materialien lassen sich bei etwa 200 bis 260 °C extrudieren. Aus verfahrenstechnischer Sicht (Verzicht auf Trocknung mit der Gefahr des Verklebens, Durchmischung und Homogenisierung der verschiedenen Komponenten, geringer Abbau,) hat es sich dabei als besonders vorteilhaft erwiesen, wenn die Extrusion der Polymere für die Deckschichtfolie (A) auf einem Zweischneckenextruder mit Entgasungsmöglichkeit durchgeführt wird.

Die so gebildete Schmelze (A) wird entweder in einer Breitschlitzdüse zu einem flachen Schmelzefilm (Cast Folien-Verfahren) oder in einer Runddüse (Blasfolien-Verfahren) zu einem ringförmigen Film ausgeformt. Anschließend wird beim Cast Folien-Verfahren der Schmelzefilm mit Hilfe einer Kühlwalze und gegebenenfalls weiterer Walzen abgezogen und verfestigt. Bei der Herstellung der Folie nach dem Blasfolien-Verfahren wird der ringförmige Film nach der bekannten Methode aufgeblasen und dabei durch Anblasen mit kalter Luft verfestigt. Die so hergestellten Folien (A) werden dann in üblicher Weise (siehe z. B. Hensen, Knappe, Potente: Kunststoffextrusiontechnik II, Extrusionsanlagen, Carl Hanser Verlag ISBN 3-446-14340-8) konfektioniert und aufgewickelt.

In einem separaten Wickler wird die konfektionierte Folie (A) abgerollt und der Laminierstation des biaxialen. Prozesses (vgl. Figur 6) zugeführt. Mittels zweier oder mehrerer Walzen wird die Deckschichtfolie (A) auf die Substratfolie (B) unter Druck auflaminiert. Eine "Verschweißung" der Deckschichtfolie (A) mit der Substratfolie (B) findet bei dem nachfolgenden Streckschritt, vorzugsweise bei der Querstreckung, z. B. in einem Rahmen, statt (bei einem Linienpressdruck zwischen 20 und 60 N/cm, bei Umgebungstemperatur).

Die Dicke der auf diese Weise hergestellten Deckschichtfolie (A) ist bei der bevorzugten Laminierung vor dem zweiten Streckschritt (= Querstreckung) bevorzugt um den Faktor 3 bis 5, vorzugsweise um den Faktor 4 dicker als nach der biaxialen Orientierung im Folienverbund (bei fertiger Folie). Bei einer Schichtdicke der Deckschicht (A) $d_A$ von bevorzugt 1,0 bis 7 µm (gemessen an der biaxial orientierten Polyesterfolie) beträgt die Dicke der Deckschichtfolie (A) danach etwa 4 bis 28 µm. Es hat sich als zweckmäßig herausgestellt, die Deckschichtfolie (A) aus Zwei- oder mehr als zwei Schichten herzustellen, wenn sie in der Dicke weniger als 15 µm betragen soll. Handelt es sich dabei um eine zweischichtige Folie mit den Schichten A' und A", so kann die Deckschichtfolie (A) bevorzugt wie folgt aufgebaut sein:

a) Die Schicht A' enthält das siegelbare und peelfähige Polymer in der gewünschten Dicke.
b) Die Schicht A" (als Trägerschicht der Deckschichtfolie (A)) besteht zweckmäßiger Weise aus Polyester, wie für die Basisschicht (B) beschrieben oder aus dem Polyester I, wie für die Deckschichtfolie (A) beschrieben. In diesem Fall ist eine besonders gute Haftung zwischen der Deckschichtfolie (A) und der Basisschichtfolie (B) gewährleistet.

Falls erforderlich, kann die Haftung zwischen der Deckschichtfolie (A) und der Basisschichtfolie (B) durch eine zusätzliche, der Querstreckung vorgeschalteten Vorheizung verbessert werden.

Die Polymere für die Basisschichtfolie (B), diejenigen für die eventuell vorhandene weitere Deckschicht (C) und gegebenenfalls diejenigen für die Zwischenschicht (D) werden den jeweils entsprechenden Extrudern zugeführt, dort aufgeschmolzen und homogenisiert. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung der Folie wird im Allgemeinen sequenziell durchgeführt. Eine simultane Streckung der Folie ist auch möglich, ist aber nicht notwendig. Bei der sequenziellen Streckung wird vorzugsweise erst in Längsrichtung (d. h. in Maschinenrichtung) und anschließend in Querrichtung (d. h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung (machine direction orientation = MDO) in einem Temperaturbereich von ca. 60 bis 130 °C (Aufheiztemperaturen 60 bis 130 °C), und in Querrichtung (transverse direction orientation = TDO) in einem Temperaturbereich von ca. 90 °C (Beginn der Streckung) bis 140 °C (Ende der Streckung) durchgeführt. Das Längsstreckverhältnis liegt bevorzugt im Bereich von 2,0:1 bis 5,5:1, insbesondere von 2,3:1 bis 5,0:1. Das Querstreckverhältnis liegt bevorzugt im Bereich von 2,4:1 bis 5,0:1, insbesondere von 2,6:1 bis 4,5:1.

In der bevorzugten Ausführungsform erfolgt die Laminierung beider Folien (Deckschichtfolie (A) und Substratfolie (B) mit evtl. weiteren Schichten (C) und (D)) vor der Querstreckung in der vorbeschriebenen Weise. Die jeweiligen Folien können daneben nach den an sich bekannten Verfahren beschichtet werden (z. B. die Basisschichtfolie (B) In-line vor der Querstreckung) und die Deckschichtfolie (A) bei ihrer Herstellung. Die Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Letzteres wird beispielsweise durch Auftragung von Barrierebeschichtungen wie EVOH, PVOH o. ä. erreicht. Vorzugsweise werden solche Schichten dann auf die nicht siegelbare Oberfläche, z. B. die Oberfläche (C) der Folie aufgetragen.

Bei der nachfolgenden Thermofixierung wird die Folie über eine Zeitdauer von etwa 0,1 bis 10 s bei einer Temperatur von bevorzugt 150 bis 250 °C gehalten. Anschließend wird die Folie in üblicher Weise aufgewickelt.

Der Glanz der Folienoberfläche (B) im Falle einer zweischichtigen Folie bzw. der Glanz der Folienoberfläche (C) bei einer dreischichtigen Folie ist bevorzugt größer als 100 (gemessen nach DIN 67530 in Anlehnung an ASTM-D 523-78 und ISO 2813 mit Einstrahlwinkel 20°). In einer bevorzugten Ausführungsform beträgt der Glanz dieser Seiten mehr als 110 und in einer besonders bevorzugten Ausführungsform mehr als 120. Diese Folienoberflächen eignen sich daher insbesondere für eine weitere funktionelle Beschichtung, für die Bedruckung oder für die Metallisierung.

Die Trübung der Folie ist bevorzugt kleiner als 20 %. In einer bevorzugten Ausführungsform beträgt die Trübung der Folie weniger als 16 % und in einer besonders bevorzugten Ausführungsform weniger als 12 %.

Ein weiterer Vorteil der Erfindung besteht darin, dass die Herstellungskosten der erfindungsgemäßen Folie nicht wesentlich über denen einer Folie aus Standardpolyester liegen. Daneben ist bei der Herstellung der Folie gewährleistet, dass Verschnittmaterial, das bei der Folienherstellung im Betrieb immanent anfällt, als Regenerat in einer Menge von bis zu ca. 60 Gew.-%, bevorzugt 5 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich z. B. hervorragend zum Verpacken von Nahrungsund Genussmitteln, insbesondere zur Verpackung von Nahrungs- und Genussmitteln in Menüschalen, bei denen peelfähige Polyesterfolien zum Öffnen der Verpackung verwendet werden.

Die nachstehende Tabelle (Tabelle 1) fasst die wichtigsten bevorzugten Folieneigenschaften noch einmal zusammen.

**Tabelle 1**

| Deckschicht bzw. Deckschichtfolie (A) | Erfindungsgemäßer Bereich | Bevorzugt | Besonders bevorzugt | Einheit | Messmethode |
|---|---|---|---|---|---|
| Anteil Einheiten im erfindungsgemäßen Polyester, aufgebaut aus aromatischen Dicarbonsäuren | 12 bis 89 | 30 bis 84 | 40 bis 82 | Mol.-% | |
| Anteil Einheiten im erfindungsgemäßen Polyester, aufgebaut aus aliphatischen Dicarbonsäuren | 11 bis 88 | 16 bis 70 | 18 bis 60 | Mol.-% | |
| Polyester I | 0 bis 50 | 5 bis 45 | 10 bis 40 | Gew.-% | |
| Polyester II | 50 bis 100 | 55 bis 95 | 60 bis 90 | Gew.-% | |
| Partikeldurchmesser $d_{50}$ | 2,0 bis 8 | 2,5 bis 7 | 3,0 bis 6 | µm | |
| Füllstoffkonzentration | 1,0 bis 10,0 | 2,5 bis 10,0 | 4,0 bis 10,0 | Gew.-% | |
| Dicke der Deckschicht A | 1,0 bis 7,0 | 1,3 bis 6,5 | 1,6 bis 6,0 | µm | |
| Partikeldurchmesser/Schichtdicken-Verhältnis | >/= 1,1 | >/= 1,3 | >/= 1,5 | | |
| **Eigenschaften** | | | | | |
| Dicke der Folie | 3 bis 200 | 4 bis 150 | 5 bis 100 | µm | |
| Mindestsiegeltemperatur von DS (A) gegen PET-Menüschalen | 165 | 160 | 155 | °C | |
| Siegelnahtfestigkeit von DS (A) gegen PET-Menüschalen | 1,5 bis 8 | 2,0 bis 8 | 2,5 bis 8 | N/15 mm | |
| Glanz der Deckschichten A und C | > 70 und > 100 | > 75 und > 110 | > 80 und > 120 | | DIN 67530 |
| Trübung der Folie | < 20 | < 16 | < 12 | % | ASTM D 1003-52 |

DS: Deckschicht, >/=: größer/gleich

Zur Charakterisierung der Rohstoffe und der Folien wurden im Rahmen der vorliegenden Erfindung die folgenden Messmethoden benutzt:

Messung des mittleren Durchmessers $d_{50}$

Die Bestimmung des mittleren Durchmessers $d_{50}$ wurde mittels Laser auf einem Malvern Master Sizer, (Fa. Malvern Instruments Ltd., UK) mittels Laserscanning durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert (auch Median genannt).

Messung der SPAN98

Die Bestimmung des Streumaßes, der SPAN98, wurde mit dem gleichen Messgerät durchgeführt, wie oben bei der Bestimmung des mittleren Durchmessers $d_{50}$ beschrieben. Der SPAN98 ist dabei wie folgt definiert:

$$SPAN98 = \frac{d_{98} - d_{10}}{d_{50}}$$

Der Ermittlung von $d_{98}$ und $d_{10}$ wird wiederum die (relative) Summenkurve der Partikelgrößenverteilung (s. o. "Messung des mittleren Durchmessers $d_{50}$") zu Grunde gelegt. Der Schnittpunkt des 98 %-Ordinatenwertes mit der Summenkurve liefert auf der Abszissenachse sofort den gewünschten $d_{98}$-Wert und der Schnittpunkt des 10 %-Ordinatenwertes mit der Summenkurve liefert auf der Abszissenachse den gewünschten $d_{10}$-Wert.

SV-Wert

Der SV-Wert des Polymers wurde durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel} - 1) \cdot 1000.$$

Glasübergangstemperaturen $T_g$

Die Glasübergangstemperatur $T_g$ wurde anhand von Folienproben mit Hilfe der DSC (Differential Scanning Calorimetry) bestimmt. Verwendet wurde ein DSC 1090 der Fa. Perkin-Elmer. Die Aufheizgeschwindigkeit betrug 20 K/min und die Einwaage ca. 12 mg. Um die thermische Vorgeschichte zu eliminieren, wurden die Proben zunächst auf 300 °C aufgeheizt, 5 Minuten gehalten und dann anschließend mit flüssigem Stickstoff abgeschreckt. Aus dem Thermogramm wurde die Temperatur für den Glasübergang $T_g$ als die Temperatur bei halber Stufenhöhe entnommen.

Siegelnahtfestigkeit (Peelkraft)

Zur Bestimmung der Siegelnahtfestigkeit wird ein Folienstreifen (100 mm lang x 15 mm breit) auf die APET-Seite eines entsprechenden Streifens der APET/CPET-Menüschale gelegt und bei der eingestellten Temperatur von ≥ 140 °C, einer Siegelzeit von 0,5 s und einem Siegeldruck von 3 bar (Siegelgerät HSG/ET der Fa. Brugger, DE, beidseitig beheizte Siegelbacke) gesiegelt. Entsprechend Figur 2 werden die gesiegelten Streifen in die Zugprüfmaschine (z. B. Fa. Zwick, DE) eingespannt und die 180°-Siegelnahtfestigkeit, d. h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z. B. 3 N/15 mm).

Bestimmung der Mindestsiegeltemperatur

Mit dem Siegelgerät HSG/ET der Fa. Brugger werden wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 3 bar und einer Siegeldauer von 0,5 s gesiegelt wird. Die 180°-Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 1 N/15 mm erreicht wird.

Rauigkeit

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

Trübung

Die Trübung nach Hölz wurde nach ASTM-D 1003-52 bestimmt.

Glanz

Der Glanz der Folie wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Reißfestigkeit

Die Reißfestigkeit der Folie wurde nach DIN 53455 gemessen. Die Prüfgeschwindigkeit ist 1 %/min; 23 °C; 50 % r.F.

E-Modul

Der E-Modul der Folie wurde nach DIN 53457 gemessen. Die Prüfgeschwindigkeit ist 1 %/min; 23 °C; 50 % r.F.
Im Folgenden wird die Erfindung anhand von Beispielen näher erläutert.

Beispiel 1

Für die heißsiegelbare und peelfähige Deckschichtfolie (A) wurde eine Mischung bestehend aus Polyester I und Polyester II hergestellt. In Tabelle 2 sind die jeweiligen Anteile der in beiden Polyestern I und II enthaltenen Dicarbonsäuren und Glykole in Mol-% und die jeweiligen Anteile der in der Mischung enthaltenen Komponenten in Gew.-% angegeben. Die Mischung wurde einem Zweischneckenextruder mit Entgasung für die siegelbare und peelfähige Deckschichtfolie (A) zugeführt. Entsprechend den in untenstehender Tabelle angeführten Verfahrensbedingungen wurden die Rohstoffe in dem Zweischneckenextruder aufgeschmolzen und homogenisiert. Die Schmelze wurde in einer Breitschlitzdüse zu einem flachen Schmelzefilm ausgeformt und mit Hilfe einer Kühlwalze abgezogen und verfestigt. Die so hergestellte unorientierte Folie (A) wurde in üblicher Weise konfektioniert und aufgewickelt. In einem separaten Wickler wurde die Folie (A) dann abgerollt und der Laminierstation des biaxialen. Herstellungsprozesses (vgl. Figur 6) zugeführt. Mittels zweier Walzen wurde die Deckschichtfolie (A) auf die Substratfolie (B) unter Druck (Linienpressdruck von 40 N/cm) auflaminiert. Eine "Verschweißung" der Deckschichtfolie (A) mit der Substratfolie (B) fand bei der Querstreckung statt.
Chips aus Polyethylenterephthalat wurden dem Extruder für die Basisschichtfolie (B) zugeführt. Ebenfalls wurden Chips aus Polyethylenterephthalat und Partikeln dem Extruder für die nicht siegelfähige Deckschicht (C) zugeführt. Entsprechend den in untenstehender Tabelle aufgeführten Verfahrensbedingungen wurden die Rohstoffe in den beiden jeweiligen Extrudern aufgeschmolzen und homogenisiert. Dann wurden durch Coextrusion in einer Dreischichtdüse die zwei Schmelzeströme übereinander geschichtet und über die Düsenlippe ausgestoßen. Der resultierende zweischichtige Schmelzefilm BC wurde abgekühlt und anschließend in Längsrichtung gestreckt. Danach wurde, wie oben beschrieben, die Deckschichtfolie (A) auf die Basisschichtfolie (B) laminiert. Das Laminat wurde in einem Querstreckrahmen gemeinsam quergestreckt, und es wurde eine transparente, dreischichtige Folie mit ABC-Aufbau in einer Gesamtdicke von 25 μm hergestellt. Die Dicke der Deckschicht (A) der biaxial orientierten Folie betrug 3,0 μm (vgl. auch Tabelle 2).

Deckschichtfolie (A), Mischung aus:

| | |
|---|---|
| 20,0 Gew.-% | Polyester I (= Copolymeres aus 78 Mol-% Ethylenterephthalat, 22 Mol-% Ethylenisophthalat) mit einem SV-Wert von 850. Die Glasübergangstemperaturvon Polyester I beträgt ca. 75 °C. Polyester I enthält darüber hinaus 20,0 Gew.-% ®Sylysia 430 (synthetisches $SiO_2$, Fuji, Japan) mit einem Partikeldurchmesser von $d_{50}$ = 3,4 μm. |
| 80 Gew.-% | Polyester II (= Copolymeres enthaltend 40 Mol-% Ethylenazelat, 50 Mol-% Ethylentherephthalat, 10 Mol-% Ethylenisophthalat) mit einem SV-Wert von 1000. Die Glasübergangstemperatur von Polyester II beträgt ca. 0 °C. |

Basisschicht (B):

100 Gew.-%     Polyethylenterephthalat mit einem SV-Wert von 800

Deckschicht (C), Mischung aus:

| | |
|---|---|
| 85 Gew.-% | Polyethylenterephthalat mit einem SV-Wert von 800; |
| 15 Gew.-% | Masterbatch aus 99 Gew.-% Polyethylenterephthalat (SV-Wert von 800) und 1,0 Gew.-% Sylobloc® 44 H (synthetisches $SiO_2$, Fa. Grace, Worms), $d_{50}$ = 2,5 μm, SPAN98 = 1,9. |

Die Herstellungsbedingungen in den einzelnen Verfahrensschritten waren:

| Extrusion | Temperaturen | A-Schicht:<br>B-Schicht:<br>C-Schicht: | 230<br>280<br>280 | °C<br>°C<br>°C |
|---|---|---|---|---|
| | Temperatur der Abzugswalze | | 20 | °C |
| Längsstreckung | Aufheiztemperatur | | 70-125 | °C |
| | Strecktemperatur | | 122 | °C |
| | Längsstreckverhältnis | | 4,5 | |
| Querstreckung | Aufheiztemperatur | | 105 | °C |
| | Strecktemperatur | | 135 | °C |
| | Querstreckverhältnis | | 4,0 | |
| Fixierung | Temperatur | | 230 | °C |
| | Dauer | | 3 | s |
| bei einem Linienpressdruck von 20 bis 60 N/cm, Umgebungstemperatur | | | | |

In Tabelle 3 sind die Eigenschaften der Folie dargestellt. Laut Messungen (Spalte 2), beträgt die Mindestsiegeltemperatur der Folie gegenüber der APET-Seite von APET/CPET-Menüschalen 120 °C. Die Folie wurde bei 140, 160, 180 und 200 °C gegen die APET-Seite von APET/CPET-Menüschalen gesiegelt (Siegeldruck 4 bar, Siegelzeit 0,5 s). Anschließend wurden Streifen des Verbundes aus erfindungsgemäßer Folie und APET/CPET-Menüschale mittels Spannungs-Dehnungstester entsprechend der vorgenannten Messvorschrift (vgl. Figur 2) auseinander gezogen. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden peelfähige Folien erhalten. Die Siegelnahtfestigkeiten gegenüber APET liegen mit ca. 5 N/15 mm im mittleren Bereich, d.h., dass sich die Folien ohne große Kraftanstrengung von der Menüschale abziehen lassen. Weiterhin hatte die Folie die geforderten guten optischen Eigenschaften, zeigte das gewünschte Handling und das gewünschte Verarbeitungsverhalten.

Beispiel 2

Im Vergleich zu Beispiel 1 wurde die Deckschichtdicke der siegelfähigen Schicht (A) von 3,0 auf 4,0 μm bei ähnlichem Folienaufbau und sonst identischer Herstellungsweise angehoben. Polyester I enthält jetzt 20,0 Gew.-% ®Sylysia 440 (synthetisches $SiO_2$, Fuji, Japan) mit einem Partikeldurchmesser von $d_{50}$ = 5,0 μm.Die Mindestsiegeltemperatur der Folie gegenüber der APET-Seite von APET/CPET-Menüschalen beträgt jetzt 118 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind etwas höher als im Beispiel 1. Sie liegen aber immer noch im mittleren Bereich, so dass sich die Folie ohne große Kraftanstrengung von der Menüschale abziehen lässt. Es wurde eine etwas geringere Trübung der Folie gemessen; das Handling und das Verarbeitungsverhalten der Folie waren wie in Beipiel 1.

Beispiel 3

Im Vergleich zu Beispiel 2 wurde bei sonst identischem Folienaufbau die Zusammensetzung von Poyester II für die siegelfähige Deckschicht (A) geändert. Die verwendete Mischung in Deckschicht (A) besteht jetzt aus folgenden Rohstoffanteilen:

30 Gew.-%    Polyester I, identisch zu Beispiel 1;

60 Gew.-%    Polyester II, ®Vitel1912, (Polyester, Bostik-Findley, USA; enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1 °C;

10 Gew.-%    COC (®Topas 8007, Ticona, Frankfurt; ein Ethylen/Norbornen-COC mit einer $T_g$ von ca. 75 °C).

Die Verfahrensparameter in der Längsstreckung entsprachen denjenigen in Beispiel 5. Die Mindestsiegeltemperatur der erfindungsgemäß hergestellen Folie gegenüber der APET-Seite von APET/CPET-Menüschalen beträgt jetzt 125 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Das Handling und das Verarbeitungsverhalten der Folie waren wie in Beispiel 1.

Vergleichsbeispiel 1

Es wurde das Beispiel 1 aus der EP-A-0 379190 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 2

Es wurde das Beispiel 22 aus der EP-A-0 379190 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 3

Es wurde das Beispiel 1 aus der WO 02/059186 A1 nachgearbeitet. In Tabelle 3 sind die Eigenschaften der Folie dargestellt. Es wurde für keine der angegebenen Siegeltemperaturen eine peelfähige Folie gegeüber CPET erhalten. Beim Abziehen der Folie von der Menüschale war die Peelkraft zu klein.
Die Zusammensetzung der Folien ist in Tabelle 2, die gemessenen Folieneigenschaften sind in Tabelle 3 zusammengefasst.

**Tabelle 2**

EP 1 529 800 A1

| | | Zusammensetzung Polyester I | | | | Zusammensetzung Polyester II | | | | | | | | Verhältnisse PI/PII/ AntiPET-Polymer | Glastem-peraturen PI/PII/ AntiPET-Polymer | Folien-aufbau | Folien-dicke | Deckschicht-Dicken | | Partikel in (A) | | | Verhältnis $d_{50}/d_{(A)}$ |
|---|---|---|---|---|---|---|---|---|---|---|---|---|---|---|---|---|---|---|---|---|---|---|---|
| | | TS | IS | EG | NG | AzS | SeS | AdS | TS | IS | EG | BD | WS | | | | | (A) | (C) | Durchme-sser | SPAN 98 | Konzen-tration | |
| | | Mol-% | | | | Mol-% | | | | | | | | Gew.-% | °C | | µm | µm | | µm | - | % | |
| Beispiele | 1 | 78 | 22 | 100 | | 40 | | | 50 | 10 | 100 | | | 20/80/0 | 75/0/ | ABC | 25 | 3 | 1 | 3,4 | 1,8 | 4,00 | 1,13 |
| | 2 | 78 | 22 | 100 | | 40 | | | 50 | 10 | 100 | | | 20/80/0 | 75/0/ | ABC | 25 | 4 | 1 | 5 | 1,8 | 4,00 | 1,25 |
| | 3 | 78 | 22 | 100 | | 40 | 1 | | 45 | 10 | >60 | | 4 | 30/60/10 | 75/-1/75 | ABC | 25 | 2,5 | 1 | 3,4 | 1,8 | 6,00 | 1,36 |
| Vergleichs-beispiele | 1 | 82 | 18 | 100 | | - | - | - | - | - | - | - | - | 100/0/0/ | 75 | AB | 20 | 3 | - | 1,5+5 | - | 0,3 | 1,68 |
| | 2 | - | - | - | | | 10 | | 90 | | 100 | | | 0/100/0/ | ca. 50 | AB | 17,2 | 4,1 | - | - | - | - | - |
| | 3 | | | | | | 50 | | 50 | | | 100 | | 0/100/0/ | -40 | AB | 25,0 | 1,5 | - | | | | |

TS Terephthalat, IS Isophthalat, EG Ethylen, BD Butan, NG Neopentyl

AzS Azelat, SeS Sebazat, AdS Adipat, WS weitere Dicarbonsäuren und Glykole

## Tabelle 3

| | | Mindest-siegeltemperatur °C | Siegelnahtfestigkeit gegenüber APET/CPET-Menüschalen | | | | Siegelnahtfestigkeit gegenüber CPET-Menüschalen | | | | Schältest (= Peelverhalten) | Trübung % | Glanz | | Rauhigkeit $R_a$ | |
| | | | 140°C | 160°C | 180°C | 200°C | 140°C | 160°C | 180°C | 200°C | | | A-Seite | C-Seite | A-Seite | C-Seite |
| | | | N/15 mm | | | | N/15 mm | | | | | | | | nm | |
| Beispiele | 1 | 120 | 4 | 4,7 | 5 | 5,2 | 3,4 | 3,9 | 4,2 | 4,6 | ++++ | 5 | 120 | 130 | 169 | 60 |
| | 2 | 118 | 5 | 5,6 | 6,8 | 7 | 4,3 | 4,2 | 5,2 | 5 | ++++ | 4 | 122 | 130 | 175 | 60 |
| | 3 | 125 | 3,5 | 4 | 4,7 | 5,7 | 3 | 3,4 | 4 | 5 | ++++ | 10 | 88 | 130 | 212 | 60 |
| VB | 1 | 109 | 4,2 | 5,5 | 8,1 | - | 13 | 110 | 190 | 69 | - | 25 | | | 75 | AB |
| VB | 2 | 112 | 2 | 4 | 6 | - | 4 | 150 | 190 | 33 | - | 20 | | | ca. 50 | AB |
| VB | 3 | 110 | 3 | 3,4 | 4 | - | 1,5 | 1,6 | 1,9 | 2,4 | - | 6 | | | | |

Schältest:  ++++:  Bei allen Siegeltemperaturen wird Folie von der Menüschale "gepeelt", ohne dass dabei die Folie ein- oder weiterreißt. Einwandfreies, sattes, sauberes Peelen der Folie von Menüschale, auch im oberen Temperaturbereich bei hoher Siegelnahtfestigkeit

-:  Bei allen Siegeltemperaturen reißt Folie beim Abziehen von der Menüschale ein

**Patentansprüche**

1. Verfahren zur Herstellung einer biaxial orientierten Polyesterfolie, welche eine Basisschicht (B) und eine heißsiegelbare und gegenüber Polyester peelfähige Deckschicht (A) aufweist, wobei die Deckschicht (A) 60 bis 99 Gew.-% Polyester enthält, der zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen, wobei die Summe der Molprozente 100 ergibt, umfassend die Schritte

    a) Extrusion zumindest der Basisschicht (B) zu einer unorientierten Folie;
    b) Streckung dieser Folie in eine erste Richtung;
    c) Streckung dieser Folie in einer zweiten, zur ersten senkrechten Richtung
    d) Thermofixierung der gestreckten Folie und
    e) Erzeugung der Deckschicht (A) auf der Basisschicht (B) durch Auflaminierung der in einem getrennten Prozess hergestellten Deckschichtfolie (A), wobei der Laminierschritt e) vor Schritt b) oder zwischen den Schritten b) und c) erfolgt.

2. Verfahren nach Anspruch 1, **dadurch gekennzeichnet, dass** die Dicke der Deckschicht (A) 1 bis 7 μm beträgt.

3. Verfahren nach Anspruch 1 oder 2, **dadurch gekennzeichnet, dass** der Laminierschritt e) mittels paarweiser angeordneter Walzen durchgeführt wird.

4. Verfahren nach einem oder mehreren der Ansprüche 1 bis 3, **dadurch gekennzeichnet, dass** der Laminierschritt e) zwischen den Schritten b) und c) erfolgt.

5. Verfahren nach einem oder mehreren der Ansprüche 1 bis 4, **dadurch gekennzeichnet, dass** in Schritt e) bei einem Linienpressdruck zwischen 20 und 60 N/cm gearbeitet wird, wobei die Temperatur der Umgebungstemperatur entspricht.

6. Verfahren nach einem oder mehreren der Ansprüche 1 bis 5, **dadurch gekennzeichnet, dass** Schritt b) der Streckung der Folie in Längs- und Schritt c) der Streckung der Folie in Querrichtung entspricht.

7. Verfahren nach einem oder mehreren der Ansprüche 1 bis 6, **dadurch gekennzeichnet, dass** die Streckung in Längsrichtung bei 60 bis 130 °C und in Querrichtung bei 90 bis 140 °C erfolgt.

8. Verfahren nach einem oder mehreren der Ansprüche 1 bis 7, **dadurch gekennzeichnet, dass** das Längsstreckverhältnis 2,0 : 1 bis 5,5 : 1 und das Querstreckverhältnis 2,4 : 1 bis 5,0 : 1 beträgt.

9. Verfahren nach einem oder mehreren der Ansprüche 1 bis 8, **dadurch gekennzeichnet, dass** bei der Thermofixierung die Folie für 0,1 bis 10 s bei einer Temperatur von 150 bis 250 °C gehalten wird.

10. Verfahren nach einem oder mehreren der Ansprüche 1 bis 9, **dadurch gekennzeichnet, dass** die Deckschichtfolie (A) aus zwei Schichten besteht.

11. Verfahren nach einem oder mehreren der Ansprüche 1 bis 10, **dadurch gekennzeichnet, dass** die aromatischen Dicarbonsäuren des Polyesters der Deckschicht (A) ausgewählt sind aus einer oder mehreren der folgenden Substanzen: Terephthalsäure, Isophthalsäure und 2,6-Naphthalindicarbonsäure.

12. Verfahren nach einem oder mehreren der Ansprüche 1 bis 11, **dadurch gekennzeichnet, dass** die aliphatischen Dicarbonsäuren des Polyesters der Deckschicht (A) ausgewählt sind aus einer oder mehreren der folgenden Substanzen: Bernsteinsäure, Pimelinsäure, Korksäure, Azelainsäure, Sebazinsäure, Glutarsäure und Adipinsäure.

13. Verfahren nach einem oder mehreren der Ansprüche 1 bis 12, **dadurch gekennzeichnet, dass** der Polyester der Deckschicht (A) 12 bis 89 Mol-% Terephthalat, 0 bis 25 Mol-% Isophthalat, 11 bis 88 Mol-% Azelat, 0 bis 50 Mol-% Sebazat, 0 bis 50 Mol-% Adipat und mehr als 30-Mol-% Ethylen oder Butylen enthält, jeweils bezogen auf die Gesamtdicarboxylat bzw. Gesamtalkylenmenge.

14. Verfahren nach einem oder mehreren der Ansprüche 1 bis 13, **dadurch gekennzeichnet, dass** die Deckschicht (A) eine Mindestsiegeltemperatur gegenüber APET/CPET oder CPET Menüschalen von nicht mehr als 165 °C aufweist.

**15.** Verfahren nach einem oder mehreren der Ansprüche 1 bis 14, **dadurch gekennzeichnet, dass** die Deckschicht (A) eine Siegelnahtfestigkeit gegenüber APET/CPET oder CPET Menüschalen von mindestens 1,5 N/15 mm Folienbreite aufweist.

**16.** Verfahren nach einem oder mehreren der Ansprüche 1 bis 15, **dadurch gekennzeichnet, dass** der Polyester der Deckschicht (A) aus zwei Polyestern I und II hergestellt wird.

**17.** Verfahren nach einem oder mehreren der Ansprüche 1 bis 16, **dadurch gekennzeichnet, dass** der Polyester I aus einem oder mehreren aromatischen Dicarboxylaten und einem oder mehreren aliphatischen Alkylenen besteht.

**18.** Verfahren nach einem oder mehreren der Ansprüche 1 bis 17, **dadurch gekennzeichnet, dass** der Polyester I Terephthalat-, Isophthalat- und Ethyleneinheiten enthält.

**19.** Verfahren nach einem oder mehreren der Ansprüche 1 bis 18, **dadurch gekennzeichnet, dass** der Anteil des Polyesters I in der Deckschicht (A) 0 bis 50 Gew.-% beträgt.

**20.** Verfahren nach einem oder mehreren der Ansprüche 1 bis 19, **dadurch gekennzeichnet, dass** der Polyester I eine Glasübergangstemperatur von mehr als 50 °C aufweist.

**21.** Verfahren nach einem oder mehreren der Ansprüche 1 bis 20, **dadurch gekennzeichnet, dass** der Polyester II aus einem oder mehreren aliphatischen und aus einem oder mehreren aromatischen Dicarboxylaten und aus einem oder mehreren aliphatischen Alkylenen besteht.

**22.** Verfahren nach einem oder mehreren der Ansprüche 1 bis 21, **dadurch gekennzeichnet, dass** der Polyester II Azelat-, Terephthalat-, Isophthalat- und Ethyleneinheiten enthält.

**23.** Verfahren nach einem oder mehreren der Ansprüche 1 bis 22, **dadurch gekennzeichnet, dass** der Anteil des Polyesters II in der Deckschicht (A) 50 bis 100 Gew.-% beträgt.

**24.** Verfahren nach einem oder mehreren der Ansprüche 1 bis 23, **dadurch gekennzeichnet, dass** der Polyester II eine Glasübergangstemperatur von weniger als 20 °C aufweist.

**25.** Verfahren nach einem oder mehreren der Ansprüche 1 bis 24, **dadurch gekennzeichnet, dass** die Deckschicht (A) anorganische und/oder organische Partikel enthält, bevorzugt in einer Konzentration von 1 bis 10 Gew.-%.

**26.** Verfahren nach einem oder mehreren der Ansprüche 1 bis 25, **dadurch gekennzeichnet, dass** die Deckschicht (A) ein mit Polyester unverträgliches Polymer, bevorzugt ein Cycloolefincopolymer, enthält.

**27.** Verfahren nach einem oder mehreren der Ansprüche 1 bis 26, **dadurch gekennzeichnet, dass** die Folie dreischichtig ist und einen A-B-C-Aufbau hat.

**28.** Verfahren nach einem oder mehreren der Ansprüche 1 bis 27, **dadurch gekennzeichnet, dass** die Basisschicht (B) zu mindestens 80 Gew.-% aus thermoplastischem Polyester besteht.

**29.** Verfahren nach einem oder mehreren der Ansprüche 1 bis 28, **dadurch gekennzeichnet, dass** der Polyester der Basisschicht (B) Terephthalat- und/oder Isophthalat- und Ethyleneinheiten enthält.

**Fig. 1** Menueschale (tray) aus APET/CPET mit Fertiggericht und von Menüschale abziehbarer (peelfähiger) Folie

**Fig. 2** Anordnung von "peelfähiger" Folie und Streifen einer APET/CPE-Menüschale im Zug-Dehnungs-Messgerät

**Fig. 3a** Reiss-Dehnungsdiagramm einer Folie mit "weldable" Verhalten

**Fig. 3b** Reiss-Dehnungsdiagramm einer Folie mit "peelable" Verhalten

**Fig. 4** Reiss-Dehnungs-Verhalten von Folien mit "weldable" und "peelable" Verhalten

**Fig. 5** Zusammenhang zwischen Siegeltemperatur in °C und Peelkraft in N/15mm

**Deckschichtfolie (A)**

**Basisschichtfolie (B)**

**Fig. 6**  Schema des Laminierprozesses

**Europäisches Patentamt**

**EUROPÄISCHER RECHERCHENBERICHT**

Nummer der Anmeldung

EP 04 02 5895

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 03/026892 A1 (DUPONT TEIJIN FILMS U.S. LIMITED PARTNERSHIP; DAWES, MARK, EDWARD) 3. April 2003 (2003-04-03) * Seite 1, Zeilen 3-7 * * Seite 3, Zeile 30 - Seite 4, Zeile 31 * * Seite 6, Zeile 4 - Seite 7, Zeile 33 * * Seite 8, Zeile 25 - Seite 13, Zeile 32 * * Seite 14, Zeile 21 - Seite 15, Zeile 23 * * Seite 17, Zeilen 10-14 * * Seite 19, Zeile 26 - Seite 22, Zeile 29 * * Seite 25, Zeile 22 - Seite 30, Zeile 14; Ansprüche 10-12,31-35; Abbildungen; Beispiele * ----- | 1-29 | C08J5/18 B32B27/36 |
| A,D | WO 02/059186 A1 (DUPONT TEIJIN FILMS U.S. LIMITED PARTNERSHIP; SANKEY, STEPHEN, WILLIAM) 1. August 2002 (2002-08-01) * Seite 1, Zeilen 3-10 * * Seite 5, Zeilen 2-32 * * Seite 8, Zeile 29 - Seite 10, Zeile 17 * * Seite 7, Zeile 22 - Seite 8, Zeile 9 * * Seite 11, Zeile 20 - Seite 12, Zeile 32 * * Seite 16, Zeile 13 - Seite 18, Zeile 12; Ansprüche; Abbildungen; Beispiele * ----- -/-- | 1-29 | RECHERCHIERTE SACHGEBIETE (Int.Cl.7) C08J B32B |

Der vorliegende Recherchenbericht wurde für alle Patentansprüche erstellt

| Recherchenort | Abschlußdatum der Recherche | Prüfer |
|---|---|---|
| München | 2. Februar 2005 | Otegui Rebollo, J |

**Europäisches Patentamt**

**EUROPÄISCHER RECHERCHENBERICHT**

Nummer der Anmeldung

EP 04 02 5895

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 02/26493 A1 (DUPONT TEIJIN FILMS U.S. LIMITED PARTNERSHIP; DAWES, MARK, EDWARD) 4. April 2002 (2002-04-04) * Seite 2, Zeile 29 - Seite 4, Zeile 22 * * Seite 5, Zeilen 8-28 * * Seite 1, Zeilen 3-5 * * Seite 8, Zeile 30 - Seite 10, Zeile 17 * * Seite 11, Zeile 9 - Seite 12, Zeile 16 * * Seite 16, Zeile 9 - Seite 19, Zeile 8 * * Seite 20, Zeile 11 - Seite 22, Zeile 8; Ansprüche 9,10,15; Abbildungen; Beispiele * ----- | 1-29 | |
| A,D | WO 96/19333 A1 (IMPERIAL CHEMICAL INDUSTRIES PLC; JEFFELS, PAMELA, MOIRA; GOUGH, THANE) 27. Juni 1996 (1996-06-27) * Seite 1, Zeilen 2,3 * * Seite 1, Zeile 29 - Seite 6, Zeile 17 * * Seite 7, Zeile 30 - Seite 8, Zeile 29; Ansprüche; Beispiele * ----- | 1-29 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 2. Februar 2005 | Otegui Rebollo, J |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 04 02 5895

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2005

| Im Recherchenbericht angeführtes Patentdokument | Datum der Veröffentlichung | Mitglied(er) der Patentfamilie | Datum der Veröffentlichung |
|---|---|---|---|
| WO 03026892 A1 | 03-04-2003 | EP 1444098 A1 | 11-08-2004 |
| WO 02059186 A1 | 01-08-2002 | CN 1489613 T | 14-04-2004 |
|  |  | EP 1362075 A1 | 19-11-2003 |
|  |  | JP 2004518007 T | 17-06-2004 |
|  |  | US 2004067284 A1 | 08-04-2004 |
| WO 0226493 A1 | 04-04-2002 | AU 9010801 A | 08-04-2002 |
|  |  | CN 1466520 T | 07-01-2004 |
|  |  | EP 1322468 A1 | 02-07-2003 |
|  |  | JP 2004509789 T | 02-04-2004 |
|  |  | US 2004052993 A1 | 18-03-2004 |
| WO 9619333 A1 | 27-06-1996 | AU 4185196 A | 10-07-1996 |
|  |  | BR 9510217 A | 04-11-1997 |
|  |  | CA 2206240 A1 | 27-06-1996 |
|  |  | CN 1171078 A | 21-01-1998 |
|  |  | EP 0799121 A1 | 08-10-1997 |
|  |  | JP 10510771 T | 20-10-1998 |

EPO FORM P0461

Für nähere Einzelheiten zu diesem Anhang : siehe Amtsblatt des Europäischen Patentamts, Nr.12/82